# EUROPEAN PATENT APPLICATION

(11) **EP 4 553 422 A1**
(43) Date of publication of application: **14.05.2025**
(21) Application number: 23871439.8
(22) Date of filing: 01.08.2023
(51) Int. Cl.: F25B 47/02, F25B 21/00

(54) **SOLID-STATE REFRIGERATION DEVICE**

(30) Priority: 30.09.2022 JP 2022157813
(71) Applicant: DAIKIN INDUSTRIES, LTD., Osaka-shi, Osaka 530-0001 (JP)
(72) Inventor: TERAKI, Junichi, Osaka-shi, Osaka 530-0001 (JP)
(74) Representative: Hoffmann Eitle
(86) International application number: PCT/JP2023/028107
(87) International publication number: WO 2024/070197

(57) **Abstract**

A solid-state refrigeration apparatus (1) performs a heating operation and a defrosting operation. In the defrosting operation, frost attached to a second heat exchanger (17) in the heating operation is removed. A solid-state refrigerant substance (12) includes a plurality of substances (12a to 12e) having different temperatures at which a caloric effect is maximized, and the substances (12a to 12e) are arranged in descending order of the temperature along an internal flow path (13). In the defrosting operation, the conveying direction of the heat medium in the internal flow path (13) with respect to the phase of a force field variation is switched to a direction opposite to that in the heating operation.

## Description

### TECHNICAL FIELD

The present disclosure relates to a solid-state refrigeration apparatus.

### BACKGROUND ART

A magnetic refrigeration apparatus disclosed in Patent Document 1 includes a plurality of beds, a high-temperature-side heat exchanger, and a low-temperature-side heat exchanger. The beds, the high-temperature-side heat exchanger, and the low-temperature-side heat exchanger are connected to a heat medium circuit. Variations in the magnetic field of a magnetic working substance in each bed cause the magnetic working substance to generate or absorb heat. A heat medium in the heat medium circuit is heated by the magnetic working substance which generates heat, or is cooled by the magnetic working substance which absorbs heat. Such an operation makes a temperature difference between the heat medium in the high-temperature-side heat exchanger and the heat medium in the low-temperature-side heat exchanger.

The heat medium of the low-temperature-side heat exchanger is low in temperature. Thus, frost may be formed on the surface of the low-temperature-side heat exchanger. In Patent Document 1, the heat medium accumulated in the high-temperature-side heat exchanger is conveyed to the low-temperature-side heat exchanger to defrost (remove the frost from) the low-temperature-side heat exchanger.

### CITATION LIST

### PATENT DOCUMENT

Patent Document 1: Japanese Unexamined Patent Publication No. 2016-11799

### SUMMARY OF THE INVENTION

### TECHNICAL PROBLEM

However, according to the defrosting method of Patent Document 1, the heat medium accumulated in the high-temperature-side heat exchanger is used for defrosting the low-temperature-side heat exchanger, and for this reason, it is necessary to increase the size of the high-temperature-side heat exchanger with respect to the low-temperature-side heat exchanger in order to ensure sufficient warm thermal energy for melting the frost. Further, a defrosting method has been proposed in which a high temperature side and a low temperature side are switched by switching a flow path to perform defrosting by using warm thermal energy generated from a magnetic working substance, but in this method, and it is necessary to add a valve to a heat medium circuit. In addition, a defrosting method has been proposed in which warm thermal energy on a high temperature side is stored and a flow path is switched at the time of defrosting to perform the defrosting by using the stored thermal energy, and it is necessary to add a valve and a tank to a heat medium circuit.

It is an object of the present disclosure to defrost a low-temperature-side heat exchanger while avoiding an increase in the size of a solid-state refrigeration apparatus such as a magnetic refrigeration apparatus and the complexity thereof.

### SOLUTION TO THE PROBLEM

A first aspect of the present disclosure is directed to a solid-state refrigeration apparatus (1) including a housing (11), a force field modulator (15), a first heat exchanger (16), a second heat exchanger (17), a heat medium circuit (C), and a heat medium conveyor (21, 50, 100). The housing (11) has a solid-state refrigerant substance (12) and an internal flow path (13) through which a heat medium flows while exchanging heat with the solid-state refrigerant substance (12). The force field modulator (15) induces a caloric effect by making a force field variation on the solid-state refrigerant substance (12) in the housing (11). The first heat exchanger (16), the second heat exchanger (17), and the internal flow path (13) are connected to the heat medium circuit (C). The heat medium conveyor (21, 50, 100) conveys the heat medium to and from the solid-state refrigerant substance (12) in the housing (11) in accordance with the force field variation in the heat medium circuit (C). The solid-state refrigeration apparatus (1) performs a heating operation and a defrosting operation. In the heating operation, the heat medium heated by the solid-state refrigerant substance (12) dissipates heat in the first heat exchanger (16), and the heat medium cooled by the solid-state refrigerant substance (12) absorbs heat in the second heat exchanger (17). In the defrosting operation, frost attached to the second heat exchanger (17) in the heating operation is removed. The solid-state refrigerant substance (12) includes a plurality of substances (12a to 12e) having different temperatures at which a caloric effect is maximized, and the substances (12a to 12e) are arranged in descending order of the temperature along the internal flow path (13). In the defrosting operation, the conveying direction of the heat medium in the internal flow path (13) with respect to the phase of the force field variation is switched to a direction opposite to that in the heating operation.

In the first aspect, in the defrosting operation, the conveying direction of the heat medium in the internal flow path (13) with respect to the phase of the force field variation is switched to the direction opposite to that in the heating operation. With this configuration, the low-temperature-side heat exchanger can be defrosted while an increase in the size of the high-temperature-side heat exchanger or the complexity of the apparatus structure due to addition of, e.g., a valve or a tank is avoided.

A second aspect of the present disclosure is an embodiment of the first aspect. In the second aspect, the housing (11) includes a plurality of partial housings (11a to 11e) connected in series in the heat medium circuit (C), and each of the plurality of partial housings (11a to 11e) has at least one of the plurality of substances (12a to 12e).

In the second aspect, the degree of freedom in the cascade arrangement of the solid-state refrigerant substance (12) increases.

A third aspect of the present disclosure is an embodiment of the first or second aspect. In the third aspect, the force field modulator (15) and the heat medium conveyor (21, 50, 100) are electrically controlled to switch the conveying direction of the heat medium in the internal flow path (13) with respect to the phase of the force field variation.

In the third aspect, the defrosting can be performed by the electric control while an increase in the size of the apparatus and the complexity of the apparatus are avoided.

A fourth aspect of the present disclosure is an embodiment of the first or second aspect. In the fourth aspect, the force field modulator (15) and the heat medium conveyor (100) are mechanically controlled to switch the conveying direction of the heat medium in the internal flow path (13) with respect to the phase of the force field variation.

In the fourth aspect, the low-temperature-side heat exchanger can be defrosted by the mechanical control while an increase in the size of the apparatus and the complexity of the apparatus are avoided.

A fifth aspect of the present disclosure is an embodiment of any one of the first to fourth aspects. In the fifth aspect, the solid-state refrigeration apparatus (1) further includes a fan (17f) configured to send air to the second heat exchanger (17), and the fan (17f) is stopped in the defrosting operation when the temperature of the second heat exchanger (17) is higher than the ambient temperature of the second heat exchanger (17).

In the fifth aspect, when the second heat exchanger (17) is the low-temperature-side heat exchanger (e.g., outdoor heat exchanger) and the temperature of the outdoor heat exchanger is higher than the outdoor air temperature, the fan (17f) is stopped, whereby heat dissipation from the outdoor heat exchanger to the outdoor air can be prevented and the defrosting can be efficiently performed.

A sixth aspect of the present disclosure is an embodiment of any one of the first to fifth aspects. In the sixth aspect, the first heat exchanger (16) is an indoor heat exchanger, the solid-state refrigeration apparatus (1) further includes an indoor fan (16f) configured to send air to the indoor heat exchanger, and the indoor fan (16f) is stopped in the defrosting operation.

In the sixth aspect, the indoor fan (16f) is stopped during defrosting, and therefore, a decrease in the temperature of an indoor space due to cold air being sent from an indoor unit provided with the indoor heat exchanger can be suppressed.

A seventh aspect of the present disclosure is an embodiment of any one of the first to sixth aspects. In the seventh aspect, the frequency of the force field variation is increased in the defrosting operation.

In the seventh aspect, the flow rate of the heat medium increases and a pressure loss increases, and as a result, the amount of heat transferred to the heat medium also increases. In addition, an eddy current loss increases in a material forming the housing (11) and a material (such as a yoke) forming the force field modulator (15) adjacent to the material of the housing (11), which results in a further increase in the amount of heat transferred to the heat medium. Thus, the defrosting can be performed at high speed.

An eighth aspect of the present disclosure is an embodiment of any one of the first to seventh aspects. In the eighth aspect, in the defrosting operation, the flow rate of the heat medium in the heat medium circuit (C) is increased.

In the eighth aspect, the flow rate of the heat medium increases and the pressure loss increases, which results in an increase in the amount of heat transferred to the heat medium. Thus, the defrosting can be performed at high speed.

A ninth aspect of the present disclosure is an embodiment of any one of the first to eighth aspects. In the ninth aspect, the solid-state refrigerant substance (12) is a magnetic working substance (12), and the force field modulator (15) is a magnetic field modulator (15) configured to make a magnetic field variation on the magnetic working substance (12).

In the ninth aspect, the magnetic refrigeration apparatus can be quickly started.

### BRIEF DESCRIPTION OF THE DRAWINGS

FIG. 1 is a piping system diagram of a magnetic refrigeration apparatus according to an embodiment.
FIG. 2 is a diagram schematically illustrating a relationship between the temperature and magnetic refrigeration effect of a plurality of solid-state refrigerant substances arranged in cascade in a single housing in the magnetic refrigeration apparatus according to the embodiment.
FIG. 3 is a diagram schematically illustrating a relationship between the temperature and magnetic refrigeration effect of a plurality of solid-state refrigerant substances arranged in cascade in a plurality of partial housings in the magnetic refrigeration apparatus according to the embodiment.
FIG. 4 is a piping system diagram for describing a heating operation performed by the magnetic refrigeration apparatus according to the embodiment.
FIG. 5 is a piping system diagram for describing a defrosting operation performed by the magnetic refrigeration apparatus according to the embodiment.
FIG. 6 shows charts illustrating a relationship between a magnetic field variation and a heat medium conveying direction in the heating operation performed by the magnetic refrigeration apparatus according to the embodiment.
FIG. 7 shows charts illustrating a relationship between a magnetic field variation and a heat medium conveying direction in the defrosting operation performed by the magnetic refrigeration apparatus according to the embodiment.
FIG. 8 is a piping system diagram of a magnetic refrigeration apparatus according to a first variation.
FIG. 9 is a schematic configuration diagram of a magnetic refrigeration unit according to the first variation.
FIG. 10 is a schematic configuration diagram for describing operation of the magnetic refrigeration unit according to the first variation.
FIG. 11 is a schematic configuration diagram for describing operation of the magnetic refrigeration unit according to the first variation.
FIG. 12 is a piping system diagram of the magnetic refrigeration apparatus according to the first variation for describing an indoor cooling operation.
FIG. 13 is a piping system diagram of the magnetic refrigeration apparatus according to the first variation for describing an indoor heating operation.
FIG. 14 is a piping system diagram of the magnetic refrigeration apparatus according to the first variation for describing a defrosting operation.
FIG. 15 is a piping system diagram of a magnetic refrigeration apparatus according to a second variation.
FIG. 16 is a schematic configuration diagram of a magnetic refrigeration unit according to the second variation.
FIG. 17 is a schematic configuration diagram for describing operation of the magnetic refrigeration unit according to the second variation.
FIG. 18 is a piping system diagram of the magnetic refrigeration apparatus according to the second variation for describing an indoor cooling operation.
FIG. 19 is a piping system diagram of the magnetic refrigeration apparatus according to the second variation for describing an indoor heating operation.
FIG. 20 is a piping system diagram of the magnetic refrigeration apparatus according to the second variation for describing a defrosting operation.
FIG. 21 is a piping system diagram of a magnetic refrigeration apparatus according to a third variation.
FIG. 22 is a plan view of a magnetic refrigeration module of the magnetic refrigeration apparatus illustrated in FIG. 21, as viewed in the axial direction of an annular housing.
FIG. 23 is a cross-sectional view of the magnetic refrigeration module of the magnetic refrigeration apparatus illustrated in FIG. 21, as viewed in the radial direction of the annular housing.
FIG. 24 is a schematic view of the configuration of a main part of a magnetic refrigeration apparatus according to a fourth variation for describing mechanical control of a magnetic field modulator and a heat medium conveyor.
FIG. 25 is a plan view of a high-pressure-side valve plate of a rotary valve type multi-way switching valve illustrated in FIG. 24, as viewed from the outside of a valve box.
FIG. 26 is a plan view of a low-pressure-side valve plate of the rotary valve type multi-way switching valve illustrated in FIG. 24, as viewed from the outside of the valve box.
FIG. 27 is a schematic view of the configuration of one example of a phase adjustment mechanism that mechanically controls a magnetic field modulator in a magnetic refrigeration apparatus according to a fifth variation.
FIG. 28 is a schematic view of the configuration of another example of the phase adjustment mechanism that mechanically controls the magnetic field modulator in the magnetic refrigeration apparatus according to the fifth variation.
FIG. 29 is a piping system diagram of a magnetic refrigeration apparatus according to a sixth variation.

### DESCRIPTION OF EMBODIMENTS

Hereinafter, embodiments of the present disclosure will be described with reference to the drawings. The embodiments below are merely exemplary ones in nature, and are not intended to limit the scope, applications, or use of the invention.

### (Embodiments)

Embodiments will be described. A magnetic refrigeration apparatus (1) of this embodiment is a solid-state refrigeration apparatus configured to adjust the temperature of a heat medium using a magnetocaloric effect, and is applied to, for example, an air conditioner. In this case, the magnetic refrigeration apparatus (1) adjusts the temperature of air in an air-conditioning target space. The air-conditioning target space is, for example, an indoor space. The magnetic refrigeration apparatus (1) switches between an indoor heating operation and a defrosting operation.

### <Configuration of Magnetic Refrigeration Apparatus>

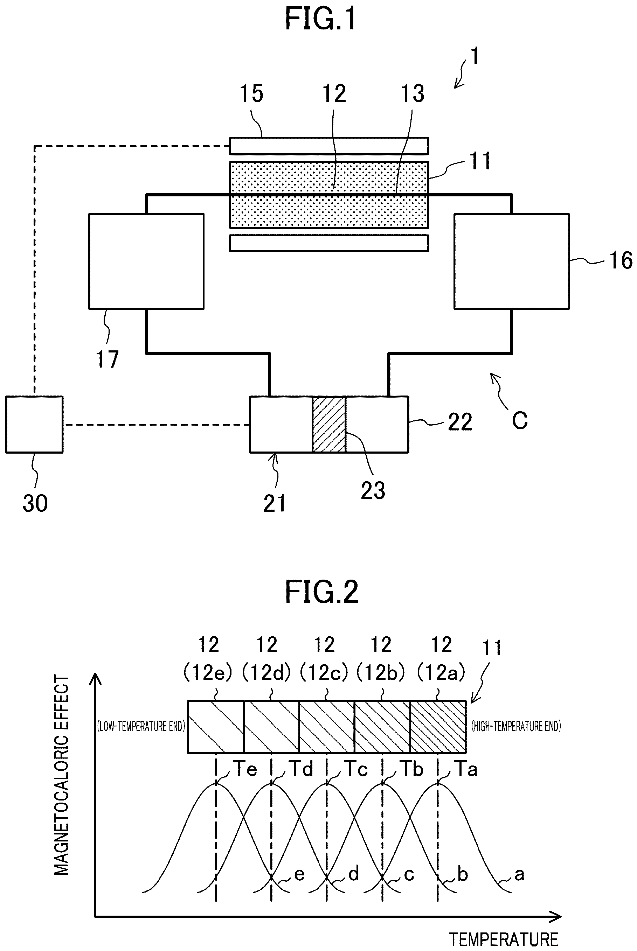

As illustrated in FIG. 1, the magnetic refrigeration apparatus (1) includes a heat medium circuit (C) filled with the heat medium. The heat medium filling the heat medium circuit (C) is conveyed through the heat medium circuit (C). Examples of the heat medium include refrigerant, water, brine, etc.

The magnetic refrigeration apparatus (1) mainly includes a housing (11), a magnetic field modulator (15) as a force field modulator, a first heat exchanger (16), a second heat exchanger (17), a reciprocating pump (21) as a heat medium conveyor, and a controller (30). The housing (11), the first heat exchanger (16), the second heat exchanger (17), and the reciprocating pump (21) are connected to each other through a heat medium pipe to form the heat medium circuit (C).

The housing (11) has a magnetic working substance (12) as a solid-state refrigerant substance, and an internal flow path (13) in which the heat medium flows while exchanging heat with the solid-state refrigerant substance (12). The housing (11) is a hollow case or column. The inside of the housing (11) is filled with the magnetic working substance (12).

The magnetic working substance (12) generates heat when a magnetic field is applied to the magnetic working substance (12) or the intensity of the applied magnetic field increases. The magnetic working substance (12) absorbs heat when the magnetic field is removed from the magnetic working substance (12) or the intensity of the applied magnetic field decreases. Examples of the material of the magnetic working substance (12) include Gd₅(Ge_{0.5}Si_{0.5})₄, La(Fe₁₋ₓSiₓ)₁₃, La(Fe₁₋ₓCoₓSi_{y})₁₃, La(Fe₁₋ₓSiₓ)₁₃H_{y}, and Mn(As_{0.9}Sb_{0.1}).

As illustrated in, for example, FIG. 2, the magnetic working substance (12) includes a plurality of substances (12a to 12e) having different Curie temperatures at which the caloric effect (magnetic refrigeration effect) is maximized. The plurality of substances (12a to 12e) is arranged in the descending order of Curie temperature (i.e., in cascade) along the internal flow path (13). Specifically, in the housing (11), five types of magnetic working substances (12), i.e., a first substance (12a), a second substance (12b), a third substance (12c), a fourth substance (12d), and a fifth substance (12e), are arranged in order from a high temperature side to a low temperature side. Various magnetic working substances (12) differ from each other in Curie temperature, i.e., a relationship between the temperature and the magnetic refrigeration effect. In this example, a relationship Ta > Tb > Tc > Td > Te is satisfied when the first substance (12a) has a Curie temperature Ta, the second substance (12b) has a Curie temperature Tb, the third substance (12c) has a Curie temperature Tc, the fourth substance (12d) has a Curie temperature Td, and the fifth substance (12e) has a Curie temperature Te.

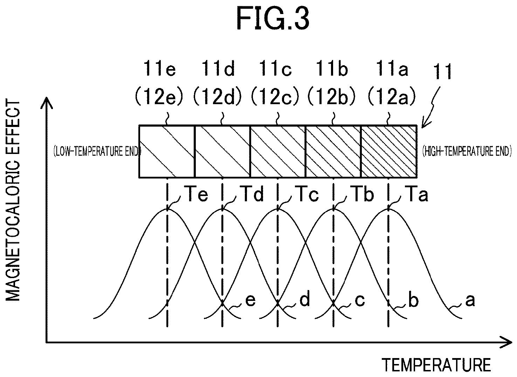

In the cascade arrangement illustrated in FIG. 2, the five types of magnetic working substances (12) are arranged in the single housing (11), but the type of material of the magnetic working substance (12), the cascade arrangement, etc. are not particularly limited. For example, a plurality of housings (11) each having multiple types of magnetic working substances (12) arranged in cascade may be arranged in parallel. Alternatively, for example, as illustrated in FIG. 3, the housing (11) may include a plurality of partial housings (11a to 11e) connected in series in the heat medium circuit (C), and each of the partial housings (11a to 11e) may house a corresponding one of the substances (12a to 12e). In this case, in each of the partial housings (11a to 11e), a single substance may be disposed, or two or more substances may be arranged in cascade. Alternatively, a single substance may be disposed in one or more partial housings (11a to 11e), and two or more substances may be arranged in cascade in one or more other partial housings (11a to 11e). In any of the housing configurations, the substances (12a to 12e) are arranged in descending order of temperature along the internal flow path (13) in the partial housings (11a to 11e) connected in series.

The magnetic field modulator (15) induces the caloric effect by making a magnetic field variation on the magnetic working substance (12) in the housing (11). The magnetic field modulator (15) includes an electromagnet capable of modulating the magnetic field, for example. The magnetic field modulator (15) performs a first modulation operation and a second modulation operation. In the first modulation operation, a predetermined magnetic field is applied to the magnetic working substance (12). In the second modulation operation, a magnetic field smaller than the predetermined magnetic field is applied, or the predetermined magnetic field is removed.

The first heat exchanger (16) may be an indoor heat exchanger configured to exchange heat between the heat medium heated by the magnetic working substance (12) and indoor air. Alternatively, the first heat exchanger (16) may exchange heat between the heat medium heated by the magnetic working substance (12) and secondary refrigerant flowing through a utilization unit (not illustrated) (e.g., air handling unit). The second heat exchanger (17) may be an outdoor heat exchanger configured to exchange heat between the heat medium cooled by the magnetic working substance (12) and outdoor air. Alternatively, the second heat exchanger (17) may exchange heat between the heat medium cooled by the magnetic working substance (12) and secondary refrigerant flowing through a heat source unit (not illustrated) (e.g., cooling tower). In the heat medium circuit (C), the first heat exchanger (16) and the second heat exchanger (17) are connected through the internal flow path (13) of the housing (11).

The reciprocating pump (21) conveys the heat medium to and from the magnetic working substance (12) in the housing (11) in accordance with the magnetic field variation. The reciprocating pump (21) is, for example, a piston pump. The reciprocating pump (21) has a pump case (22), a piston (23), and a drive mechanism (not illustrated). The piston (23) is disposed inside the pump case (22). The piston (23) divides the inside of the pump case (22) into two chambers. In the heat medium circuit (C), one chamber (hereinafter referred to as a first chamber) of the pump case (22) is connected to the first heat exchanger (16), and the other chamber (hereinafter referred to as a second chamber) of the pump case (22) is connected to the second heat exchanger (17). The drive mechanism described above has a rod coupled to the piston (23), a crank coupled to the rod, and an electric motor that drives the crank. In response to rotary drive of the crank by the electric motor, the rod moves back and forth. This allows the piston (23) to reciprocate inside the pump case (22).

Specifically, the reciprocating pump (21) alternately and repeatedly performs a first conveying operation and a second conveying operation. In the first conveying operation, the piston (23) moves in a direction of expanding the first chamber and contracting the second chamber. Accordingly, the heat medium is discharged from the second chamber, and the heat medium in the heat medium circuit (C) sequentially moves toward the second heat exchanger (17), the housing (11) (internal flow path (13)), and the first heat exchanger (16), and is sucked into the first chamber. In the second conveying operation, the piston (23) moves in a direction of contracting the first chamber and expanding the second chamber. Accordingly, the heat medium is discharged from the first chamber, and the heat medium in the heat medium circuit (C) sequentially moves toward the first heat exchanger (16), the housing (11) (internal flow path (13)), and the second heat exchanger (17), and is sucked into the second chamber.

The controller (30) controls, for example, operation of each of the magnetic field modulator (15) and the reciprocating pump (21). The controller (30) includes, for example, a microcomputer and a memory device (specifically, semiconductor memory) that stores software for operating the microcomputer. The controller (30) is connected to each of the magnetic field modulator (15) and the reciprocating pump (21) via a communication line.

### <Operation of Magnetic Refrigeration Apparatus>

The magnetic refrigeration apparatus (1) performs a heat dissipation operation (hot blow) and a heat absorption operation (cold blow). In the heat dissipation operation, a predetermined magnetic field is applied to the magnetic working substance (12) and the heat medium is moved in a first direction in the internal flow path (13), whereby warm thermal energy generated in the magnetic working substance (12) is conveyed to the outside of the housing (11), for example, the first heat exchanger (16), by the heat medium and is dissipated. In the heat absorption operation, a magnetic field smaller than the predetermined magnetic field is applied to the magnetic working substance (12) or the predetermined magnetic field is removed and the heat medium is moved in a second direction opposite to the first direction in the internal flow path (13), whereby cold thermal energy generated in the magnetic working substance (12) is conveyed to the outside of the housing (11), for example, the second heat exchanger (17), by the heat medium and is absorbed.

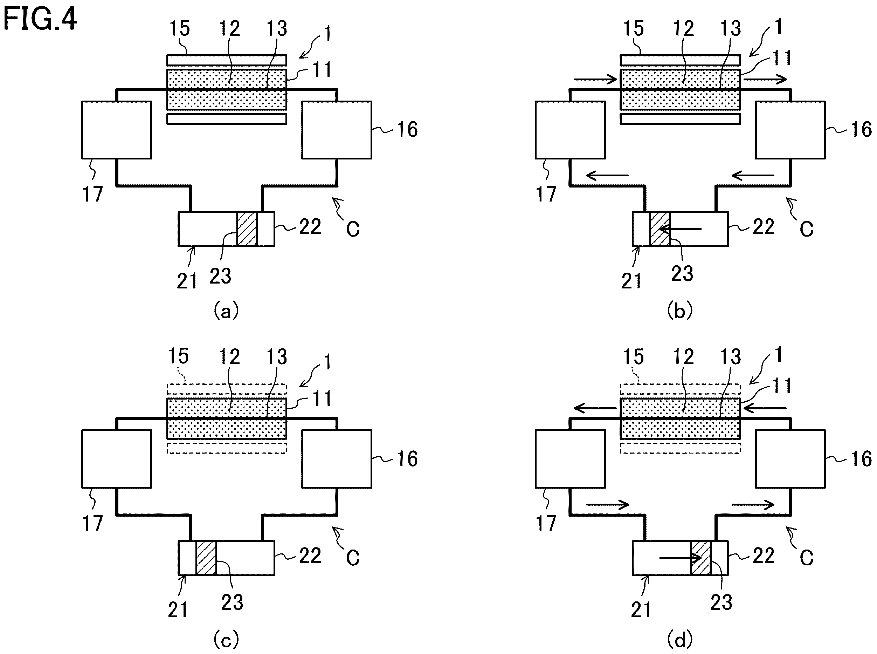

Specifically, as illustrated in (a) and (b) of FIG. 4, in the heat dissipation operation, the first modulation operation (excitation) of the magnetic field modulator (15) and the first conveying operation of the reciprocating pump (21) are performed. In the heat dissipation operation, the heat medium is heated in the internal flow path (13) of the housing (11). The heated heat medium dissipates heat in the first heat exchanger (16).

As illustrated in (c) and (d) of FIG. 4, in the heat absorption operation, the second modulation operation (demagnetization) of the magnetic field modulator (15) and the second conveying operation of the reciprocating pump (21) are performed. In the heat absorption operation, the heat medium is cooled in the internal flow path (13) of the housing (11). The cooled heat medium absorbs heat in the second heat exchanger (17).

When the magnetic refrigeration apparatus (1) performs a cycle (active magnetic refrigerator (AMR) cycle) of repeating the heat dissipation operation and the heat absorption operation described above, the magnetic working substance (12) in the housing (11) is recovered while generating the warm thermal energy and the cold thermal energy by the magnetic field variation. Accordingly, a temperature gradient is generated in the housing (11), resulting in a great temperature difference between the high-temperature end and low-temperature end of the housing (11).

In a case where the first heat exchanger (16) is the indoor heat exchanger and the second heat exchanger (17) is the outdoor heat exchanger, the heat medium heated by the magnetic working substance (12) dissipates heat to the indoor air in the first heat exchanger (16) as a high-temperature-side heat exchanger to heat the indoor air, while the heat medium cooled by the magnetic working substance (12) absorbs heat from the outdoor air in the second heat exchanger (17) as a low-temperature-side heat exchanger, as illustrated in FIG. 4. Thus, the indoor heating operation (heating operation) can be performed.

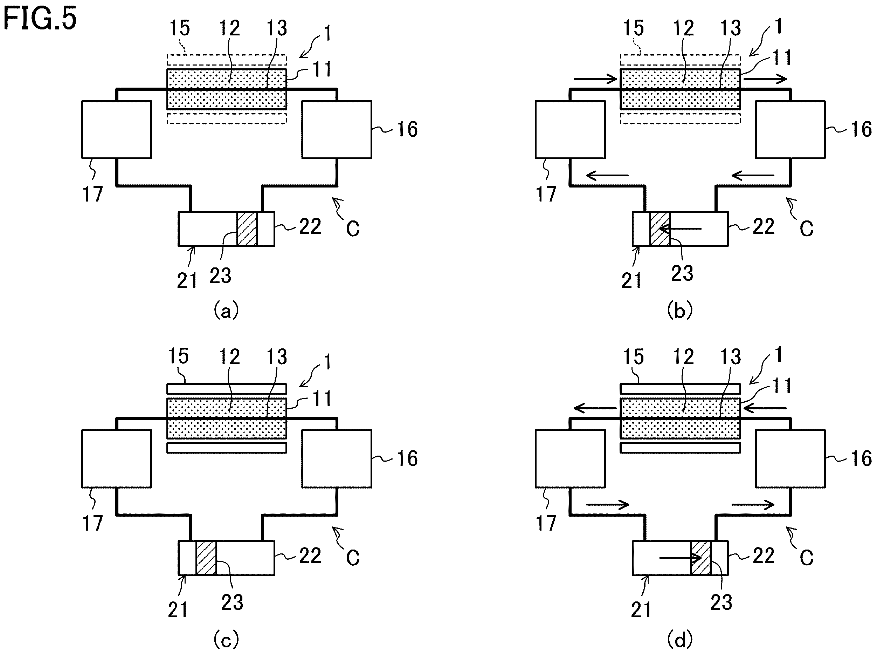

In the indoor heating operation, the temperature of the heat medium in the second heat exchanger (17) is low, therefore, frost may be formed on the surface of the second heat exchanger (17). In the defrosting operation of removing the attached frost, in this embodiment, as illustrated in FIG. 5, the conveying direction of the heat medium in the internal flow path (13) with respect to the phase of the magnetic field variation is switched to a direction opposite to that in the indoor heating operation illustrated in FIG. 4.

Specifically, in the operation illustrated in (a) and (b) of FIG. 5, the second modulation operation (demagnetization) of the magnetic field modulator (15) and the first conveying operation of the reciprocating pump (21) are performed, and the heat medium cooled in the internal flow path (13) of the housing (11) absorbs heat in the first heat exchanger (16). On the other hand, in the operation illustrated in (c) and (d) of FIG. 5, the first modulation operation (excitation) of the magnetic field modulator (15) and the second conveying operation of the reciprocating pump (21) are performed, and the heat medium heated in the internal flow path (13) of the housing (11) dissipates heat in the second heat exchanger (17) and defrosts the second heat exchanger (17).

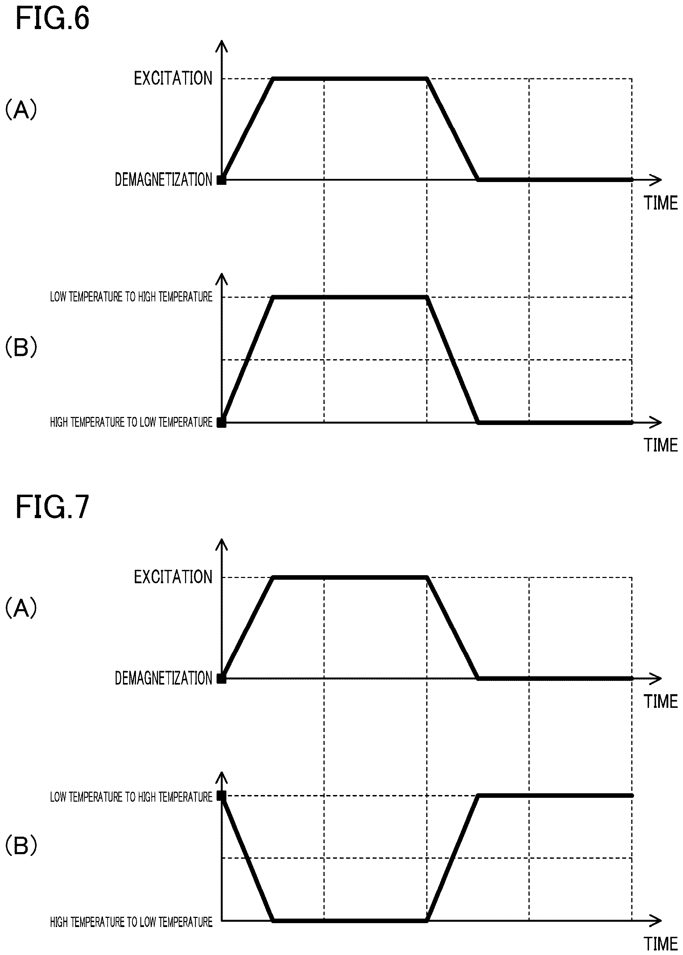

As described above, in the defrosting operation of this embodiment, as illustrated in FIG. 7, the timing of the magnetic field variation and the heat medium flow, i.e., the active magnetic refrigerator (AMR) cycle, is reversed (phase reversal by 180°) as compared with the case of the indoor heating operation illustrated in FIG. 6. In FIGS. 6 and 7, (A) illustrates the magnetic field variation, and (B) illustrates the conveying direction of the heat medium. Thus, heat is transferred from the high temperature side to the low temperature side to heat the outdoor heat exchanger (second heat exchanger (17)) as the low-temperature-side heat exchanger, thereby defrosting the outdoor heat exchanger.

In this embodiment, the case where the internal flow path (13) is located along the longitudinal direction of the housing (11), in other words, the case where a high-temperature-side inlet/outlet port and a low-temperature-side inlet/outlet port of the internal flow path (13) are arranged at both ends of the housing (11) in the longitudinal direction thereof, has been described as an example, but the location of the internal flow path (13) is not limited thereto. For example, the high-temperature-side inlet/outlet port and low-temperature-side inlet/outlet port of the internal flow path (13) may be arranged on the same surface of the housing (11). In this case, a direction in which the heat medium flows from the low-temperature-side inlet/outlet port to the high-temperature-side inlet/outlet port in the internal flow path (13) is a "first direction", and a direction in which the heat medium flows from the high-temperature-side inlet/outlet port to the low-temperature-side inlet/outlet port is a "second direction."

### <Features of Embodiments>

As described above, the magnetic refrigeration apparatus (1) of this embodiment includes the housing (11), the magnetic field modulator (15), the first heat exchanger (16), the second heat exchanger (17), the heat medium circuit (C), and the reciprocating pump (21). The housing (11) has the magnetic working substance (12) and the internal flow path (13) through which the heat medium flows while exchanging heat with the magnetic working substance (12). The magnetic field modulator (15) induces the caloric effect by making the magnetic field variation on the magnetic working substance (12) in the housing (11). The first heat exchanger (16), the second heat exchanger (17), and the internal flow path (13) are connected to the heat medium circuit (C). The reciprocating pump (21) conveys, in the heat medium circuit (C), the heat medium to and from the magnetic working substance (12) in the housing (11) in accordance with the magnetic field variation. The magnetic refrigeration apparatus (1) performs the heating operation and the defrosting operation. In the heating operation, the heat medium heated by the magnetic working substance (12) dissipates heat in the first heat exchanger (16), and the heat medium cooled by the magnetic working substance (12) absorbs heat in the second heat exchanger (17). In the defrosting operation, the frost attached to the second heat exchanger (17) in the heating operation is removed. The magnetic working substance (12) includes the substances (12a to 12e) having different temperatures at which the caloric effect is maximized, and the substances (12a to 12e) are arranged in descending order of the temperature along the internal flow path (13).

In the magnetic refrigeration apparatus (1) of this embodiment, in the defrosting operation, the conveying direction of the heat medium in the internal flow path (13) with respect to the phase of the magnetic field variation is switched to the direction opposite to that in the heating operation. With this configuration, the low-temperature-side heat exchanger can be defrosted at low cost while an increase in the size of the high-temperature-side heat exchanger or the complexity of the apparatus structure due to addition of, e.g., a valve or a tank is avoided.

Specifically, in the magnetic refrigeration apparatus (1) of this embodiment, a loss due to the reversal of the AMR cycle (e.g., magnetic refrigeration cycle work, heat medium pressure loss, or eddy current loss) can also be used as a heat source in addition to the warm thermal energy in the high-temperature-side (in this example, indoor-side) first heat exchanger (16) as a heat source. Thus, it is not necessary to increase the size of the high-temperature-side heat exchanger or place a heat storage tank. Further, the first heat exchanger (16) (indoor heat exchanger) can be made lower in temperature than the second heat exchanger (17) (outdoor heat exchanger) in the defrosting operation, and such a temperature difference can be used as a heat source. Thus, an increase in the size of the indoor heat exchanger can be avoided.

According to the magnetic refrigeration apparatus (1) of this embodiment, the controller (30) only electrically controls the magnetic field modulator (15) and the reciprocating pump (21) to switch the conveying direction of the heat medium in the internal flow path (13) with respect to the phase of the magnetic field variation to the direction opposite to that in the heating operation in the defrosting operation. Thus, the following advantages are obtained as compared with a conventional method in which a high temperature side and a low temperature side are switched by switching a flow path by a valve in a defrosting operation and the defrosting is performed by warm thermal energy generated by a magnetic working substance. That is, when the magnetic refrigeration apparatus (1) of this embodiment shifts to the defrosting operation, the Curie temperature of each of the materials of the magnetic working substances (12) arranged in cascade is close to the temperature of the heat medium, and therefore, the amount of heat transfer increases, which enables quick defrosting. In contrast, according to the conventional method using the flow path switching by the valve, at the time of the shift to the defrosting operation, the Curie temperature of each of the materials of the magnetic working substances (12) arranged in cascade is significantly different from the temperature of the heat medium, and for this reason, the amount of heat transfer is decreased, which may result in a delay in defrosting or failure in defrosting.

In the magnetic refrigeration apparatus (1) of this embodiment, the housing (11) may include a plurality of partial housings (11a to 11e) connected in series in the heat medium circuit (C), and each of the partial housings (11a to 11e) may have at least one of the substances (12a to 12e). With this configuration, the degree of freedom in the cascade arrangement of the solid-state refrigerant substance (12) increases.

In the magnetic refrigeration apparatus (1) of this embodiment, the magnetic field modulator (15) and the reciprocating pump (21) may be electrically controlled to switch the conveying direction of the heat medium in the internal flow path (13) with respect to the phase of the magnetic field variation. With this configuration, the defrosting can be performed by the electric control while an increase in the size of the apparatus and the complexity of the apparatus are avoided.

In the magnetic refrigeration apparatus (1) of this embodiment, the frequency of the magnetic field variation may be increased in the defrosting operation.

With this configuration, the frequency of the reciprocating conveyance of the heat medium increases with the increase in frequency of the magnetic field variation, and therefore, the flow rate of the heat medium increases and the pressure loss increases, which results in an increase in the amount of heat transferred to the heat medium. In addition, the eddy current loss increases in the material forming the housing (11) and the material (such as a yoke) forming the force field modulator (15) adjacent to the material of the housing (11), which results in a further increase in the amount of heat transferred to the heat medium. Thus, the defrosting can be performed at high speed.

In the magnetic refrigeration apparatus (1) of this embodiment, the flow rate of the heat medium in the heat medium circuit (C) may be increased in the defrosting operation.

With the configuration, the flow rate of the heat medium increases and the pressure loss increases, which results in an increase in the amount of heat transferred to the heat medium. Thus, the defrosting can be performed at high speed.

### (Examples)

The defrosting operation was simulated on a configuration (15-stage cascade AMR) in which 15 types of magnetic working substances (12) are arranged in cascade in the magnetic refrigeration apparatus (1) of this embodiment. Simulation conditions were a room aircon (RA) of 4 kW, a low heating temperature (outdoor air temperature: 2°C, indoor temperature: 20°C), a water amount of 2 L (20°C) inside the indoor heat exchanger and the pipe, an icing amount of 1.4 kg (required melting heat of 468 kJ) on the outdoor heat exchanger, and no heat exchange with the indoor air in the indoor heat exchanger (fan stopped). As a result of the simulation, ice melted in about 70 seconds, and after a lapse of three minutes from the start of the defrosting, the temperature of each of the materials of the magnetic working substances (12) returned to the vicinity of the Curie temperature before the defrosting operation (i.e., during the indoor heating operation), and the indoor heating operation could be resumed. At the time of switching to the defrosting operation, the temperature of each of the materials of the magnetic working substances (12) started to decrease. However, at the beginning of the operation switching, the temperature of each material was in the vicinity of the Curie temperature, and therefore, the amount of heat transferred to the heat medium in the internal flow path (13) was great.

### (First Variation)

A first variation will be described. A magnetic refrigeration apparatus (1) of this variation is a solid-state refrigeration apparatus configured to adjust the temperature of a heat medium using a magnetocaloric effect, and is applied to, for example, an air conditioner. In this case, the magnetic refrigeration apparatus (1) adjusts the temperature of air in an air-conditioning target space. The air-conditioning target space is, for example, an indoor space. The magnetic refrigeration apparatus (1) switches between an indoor cooling operation, an indoor heating operation, and a defrosting operation.

### <Configuration of Magnetic Refrigeration Apparatus>

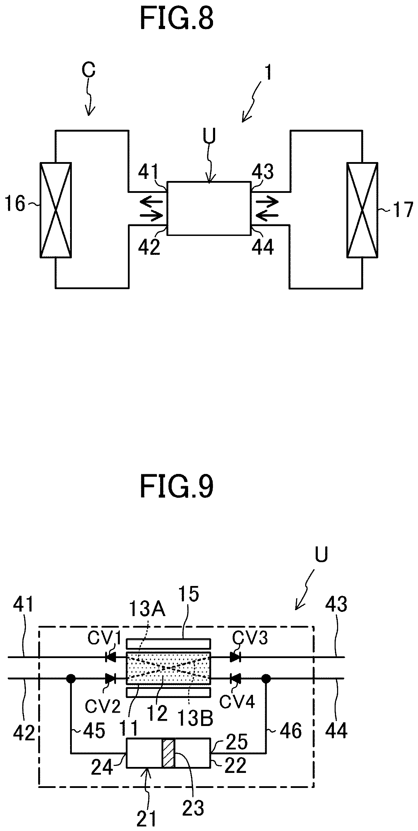

FIGS. 8 and 9 are a piping system diagram of the magnetic refrigeration apparatus (1) of this variation and a schematic configuration diagram of a magnetic refrigeration unit (U) of this variation. In FIGS. 8 and 9, the same components as those of the magnetic refrigeration apparatus (1) of the embodiment illustrated in FIG. 1 are denoted by the same reference numerals.

As illustrated in FIG. 8, the magnetic refrigeration apparatus (1) mainly includes the magnetic refrigeration unit (U), the first heat exchanger (16), and the second heat exchanger (17). The magnetic refrigeration unit (U), the first heat exchanger (16), and the second heat exchanger (17) are connected to each other through a heat medium pipe to form the heat medium circuit (C). Although not illustrated, the magnetic refrigeration apparatus (1) of this variation includes a controller similar to the controller (30) of the above-described embodiment.

As illustrated in FIG. 9, the magnetic refrigeration unit (U) mainly includes the housing (11), the magnetic field modulator (15) as the force field modulator, the reciprocating pump (21) as the heat medium conveyor, a first outflow pipe (41), a first inflow pipe (42), a second outflow pipe (43), a second inflow pipe (44), a first pump-side pipe (45), and a second pump-side pipe (46).

As in the above-described embodiment, the housing (11) has the magnetic working substance (12) as the solid-state refrigerant substance, and the internal flow path (13) in which the heat medium flows while exchanging heat with the solid-state refrigerant substance (12). The magnetic working substance (12) includes the substances (12a to 12e) having different Curie temperatures at which the caloric effect is maximized, and the substances (12a to 12e) are arranged in descending order of the Curie temperature (i.e., in cascade) along the internal flow path (13).

In this variation, a first internal flow path (13A) and a second internal flow path (13B) are formed as the internal flow path (13) inside the housing (11). The first outflow pipe (41) is connected to one end of the first internal flow path (13A). The second inflow pipe (44) is connected to the other end of the first internal flow path (13A). The first inflow pipe (42) is connected to one end of the second internal flow path (13B). The second outflow pipe (43) is connected to the other end of the second internal flow path (13B).

The first outflow pipe (41) is provided with a first check valve (CV1). The first inflow pipe (42) is provided with a second check valve (CV2). The second outflow pipe (43) is provided with a third check valve (CV3). The second inflow pipe (44) is provided with a fourth check valve (CV4).

The first check valve (CV1) allows the heat medium to flow from the first internal flow path (13A) of the housing (11) toward the first heat exchanger (16), and prevents the heat medium from flowing in the opposite direction thereof. The second check valve (CV2) allows the heat medium to flow from the first heat exchanger (16) toward the second internal flow path (13B) of the housing (11), and prevents the heat medium from flowing in the opposite direction thereof. The third check valve (CV3) allows the heat medium to flow from the second internal flow path (13B) of the housing (11) toward the second heat exchanger (17), and prevents the heat medium from flowing in the opposite direction thereof. The fourth check valve (CV4) allows the heat medium to flow from the second heat exchanger (17) toward the first internal flow path (13A) of the housing (11), and prevents the heat medium from flowing in the opposite direction thereof.

As in the above-described embodiment, the magnetic field modulator (15) induces the caloric effect by making the magnetic field variation on the magnetic working substance (12) in the housing (11). The magnetic field modulator (15) includes the electromagnet capable of modulating the magnetic field, for example. The magnetic field modulator (15) performs the first modulation operation and the second modulation operation. In the first modulation operation, a predetermined magnetic field is applied to the magnetic working substance (12). In the second modulation operation, a magnetic field smaller than the predetermined magnetic field is applied, or the predetermined magnetic field is removed.

As in the above-described embodiment, the reciprocating pump (21) reciprocally conveys the heat medium in the heat medium circuit (C). The reciprocating pump (21) is a piston pump. The reciprocating pump (21) has the pump case (22), the piston (23), and the drive mechanism (not illustrated). The piston (23) is disposed inside the pump case (22). The piston (23) divides the inside of the pump case (22) into the two chambers. The reciprocating pump (21) is provided with a first port (24) and a second port (25). One of the chambers of the pump case (22) communicates with the first port (24), and the other chamber communicates with the second port (25).

One end of the first pump-side pipe (45) is connected to the first port (24). The other end of the first pump-side pipe (45) is connected to a portion of the first inflow pipe (42) upstream of the second check valve (CV2). One end of the second pump-side pipe (46) is connected to the second port (25). The other end of the second pump-side pipe (46) is connected to a portion of the second inflow pipe (44) upstream of the fourth check valve (CV4).

The drive mechanism has the rod coupled to the piston (23), the crank coupled to the rod, and the electric motor configured to drive the crank. In response to rotary drive of the crank by the electric motor, the rod moves back and forth. This allows the piston (23) to reciprocate inside the pump case (22).

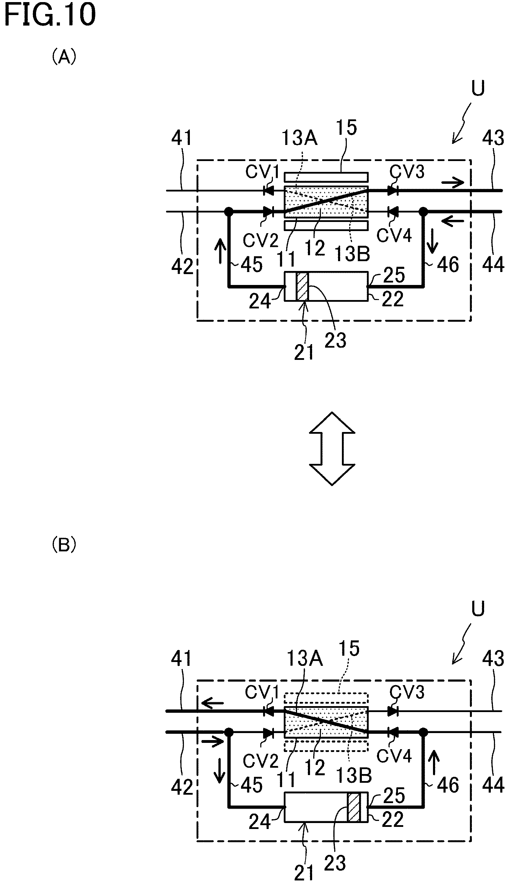

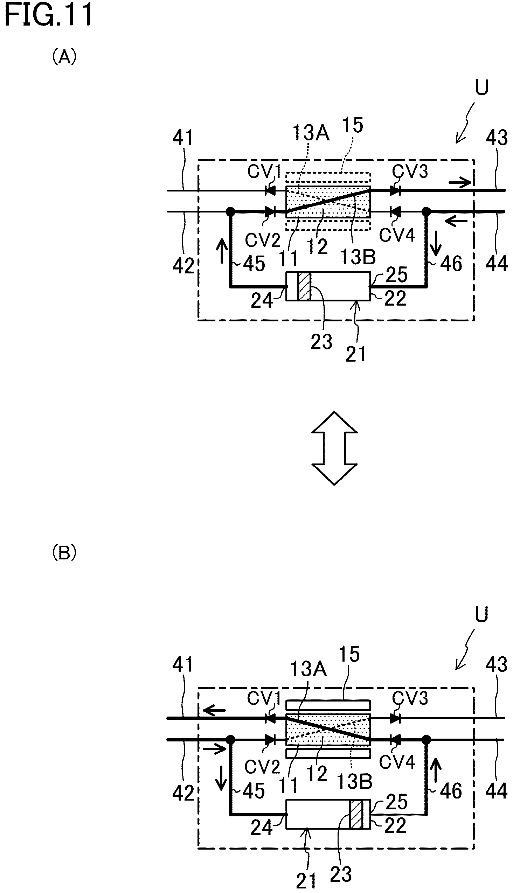

Specifically, the reciprocating pump (21) alternately and repeatedly performs the first conveying operation and the second conveying operation. In the first conveying operation (see (A) of FIGS. 10 and 11), the piston (23) moves toward the first port (24). Accordingly, the heat medium is discharged from the first port (24). The discharged heat medium sequentially flows through the first inflow pipe (42), the second internal flow path (13B), and the second outflow pipe (43). In the second conveying operation (see (B) of FIGS. 10 and 11), the piston (23) moves toward the second port (25). Accordingly, the heat medium is discharged from the second port (25). The discharged heat medium sequentially flows through the second inflow pipe (44), the first internal flow path (13A), and the first outflow pipe (41).

### <Operation of Magnetic Refrigeration Apparatus>

The magnetic refrigeration apparatus (1) of this variation performs the indoor cooling operation, the indoor heating operation, and the defrosting operation. In this variation, the first heat exchanger (16) is the indoor heat exchanger configured to exchange heat between the heat medium heated by the magnetic working substance (12) and the indoor air, and the second heat exchanger (17) is the outdoor heat exchanger configured to exchange heat between the heat medium cooled by the magnetic working substance (12) and the outdoor air. That is, in the indoor cooling operation, air in the indoor space is cooled. The indoor cooling operation corresponds to a cooling operation. In the indoor heating operation, air in the indoor space is heated. The indoor heating operation corresponds to the heating operation. In the defrosting operation, frost on the outdoor heat exchanger is melted.

In the indoor cooling operation, the operation illustrated in (A) of FIG. 10 and the operation illustrated in (B) of FIG. 10 are alternately and repeatedly performed.

In the operation illustrated in (A) of FIG. 10, the first modulation operation of the magnetic field modulator (15) and the first conveying operation of the reciprocating pump (21) are performed simultaneously. Accordingly, the heat medium is heated in the second internal flow path (13B) of the housing (11), and the heated heat medium flows out of the second outflow pipe (43). At the same time, the heat medium in the heat medium circuit (C) flows into the second port (25) of the pump case (22).

In the operation illustrated in (B) of FIG. 10, the second modulation operation of the magnetic field modulator (15) and the second conveying operation of the reciprocating pump (21) are performed simultaneously. Accordingly, the heat medium is cooled in the first internal flow path (13A) of the housing (11), and the cooled heat medium flows out of the first outflow pipe (41). At the same time, the heat medium in the heat medium circuit (C) flows into the first port (24) of the pump case (22).

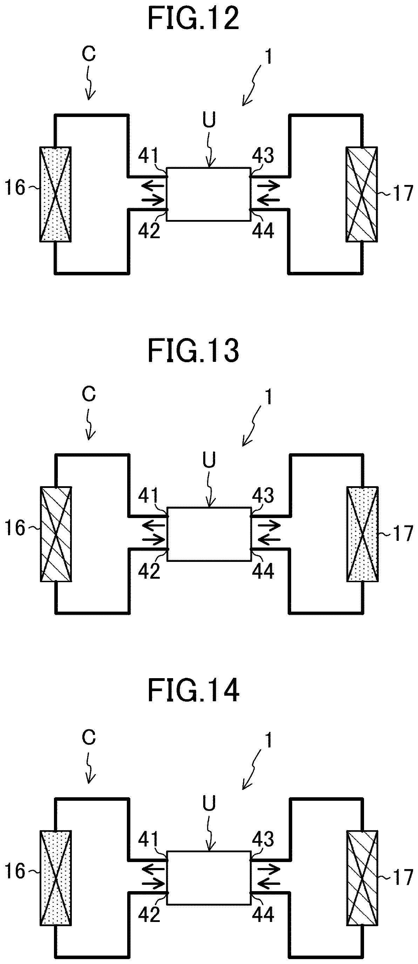

The heat medium heated by the magnetic refrigeration unit (U) in the operation illustrated in (A) of FIG. 10 flows through the second heat exchanger (17) as illustrated in FIG. 12. In the second heat exchanger (17), i.e., the outdoor heat exchanger, the heat medium dissipates heat to the outdoor air. The heat medium having dissipated heat in the second heat exchanger (17) returns to the magnetic refrigeration unit (U).

The heat medium cooled by the magnetic refrigeration unit (U) in the operation illustrated in (B) of FIG. 10 flows through the first heat exchanger (16) as illustrated in FIG. 12. In the first heat exchanger (16), i.e., the indoor heat exchanger, the heat medium absorbs heat from the indoor air. As a result, the indoor air is cooled. The heat medium having absorbed heat in the first heat exchanger (16) returns to the magnetic refrigeration unit (U).

For the sake of convenience, the flow of the heat medium in each operation is shown in the same figure which is FIG. 12. In FIG. 12, one of the first heat exchanger (16) or the second heat exchanger (17), in which the heat medium dissipates heat, is hatched, and the other heat exchanger in which the heat medium absorbs heat is dotted. The same also applies to FIGS. 13 and 14 to be described later.

In the indoor heating operation, the operation illustrated in (A) of FIG. 11 and the operation illustrated in (B) of FIG. 11 are alternately and repeatedly performed.

In the operation illustrated in (A) of FIG. 11, the second modulation operation of the magnetic field modulator (15) and the first conveying operation of the reciprocating pump (21) are performed simultaneously. Accordingly, the heat medium is cooled in the second internal flow path (13B) of the housing (11), and the cooled heat medium flows out of the second outflow pipe (43). At the same time, the heat medium in the heat medium circuit (C) flows into the second port (25) of the pump case (22).

In the operation illustrated in (B) of FIG. 11, the first modulation operation of the magnetic field modulator (15) and the second conveying operation of the reciprocating pump (21) are performed simultaneously. Accordingly, the heat medium is heated in the first internal flow path (13A) of the housing (11), and the heated heat medium flows out of the first outflow pipe (41). At the same time, the heat medium in the heat medium circuit (C) flows into the first port (24) of the pump case (22).

The heat medium cooled by the magnetic refrigeration unit (U) in the operation illustrated in (A) of FIG. 11 flows through the second heat exchanger (17) as illustrated in FIG. 13. In the second heat exchanger (17), i.e., the outdoor heat exchanger, the heat medium absorbs heat from the outdoor air. The heat medium having absorbed heat in the second heat exchanger (17) returns to the magnetic refrigeration unit (U).

The heat medium heated by the magnetic refrigeration unit (U) in the operation illustrated in (B) of FIG. 11 flows through the first heat exchanger (16) as illustrated in FIG. 13. In the first heat exchanger (16), i.e., the indoor heat exchanger, the heat medium dissipates heat to the indoor air. As a result, the indoor air is heated. The heat medium having dissipated heat in the first heat exchanger (16) returns to the magnetic refrigeration unit (U).

In the defrosting operation, basically the same operation as that in the indoor cooling operation, i.e., the operation illustrated in (A) of FIG. 10 and the operation illustrated in (B) of FIG. 10, is alternately and repeatedly performed.

The heat medium heated by the magnetic refrigeration unit (U) in the operation illustrated in (A) of FIG. 10 flows through the second heat exchanger (17) as illustrated in FIG. 14. In the second heat exchanger (17), i.e., the outdoor heat exchanger, frost on the surface of the outdoor heat exchanger is melted by the heat medium flowing through the outdoor heat exchanger (17). The heat medium used for defrosting the outdoor heat exchanger returns to the magnetic refrigeration unit (U).

The heat medium cooled by the magnetic refrigeration unit (U) in the operation illustrated in (B) of FIG. 10 flows through the first heat exchanger (16) as illustrated in FIG. 14. In the first heat exchanger (16), i.e., the indoor heat exchanger, the heat medium absorbs heat from the indoor air. The heat medium having absorbed heat in the first heat exchanger (16) returns to the magnetic refrigeration unit (U).

### <Features of First Variation>

As described above, in the magnetic refrigeration apparatus (1) of this variation, in the defrosting operation, the conveying direction of the heat medium in the internal flow path (13) with respect to the phase of the magnetic field variation is switched to the direction opposite to that in the heating operation, as in the above-described embodiment. With this configuration, the low-temperature-side heat exchanger can be defrosted at low cost while an increase in the size of the high-temperature-side heat exchanger or the complexity of the apparatus structure due to addition of, e.g., a valve or a tank is avoided.

### (Second Variation)

A second variation will be described. A magnetic refrigeration apparatus (1) of this variation is a solid-state refrigeration apparatus configured to adjust the temperature of a heat medium using a magnetocaloric effect, and is applied to, for example, an air conditioner. **In** this case, the magnetic refrigeration apparatus (1) adjusts the temperature of air in an air-conditioning target space. The air-conditioning target space is, for example, an indoor space. The magnetic refrigeration apparatus (1) switches between an indoor cooling operation, an indoor heating operation, and a defrosting operation.

### <Configuration of Magnetic Refrigeration Apparatus>

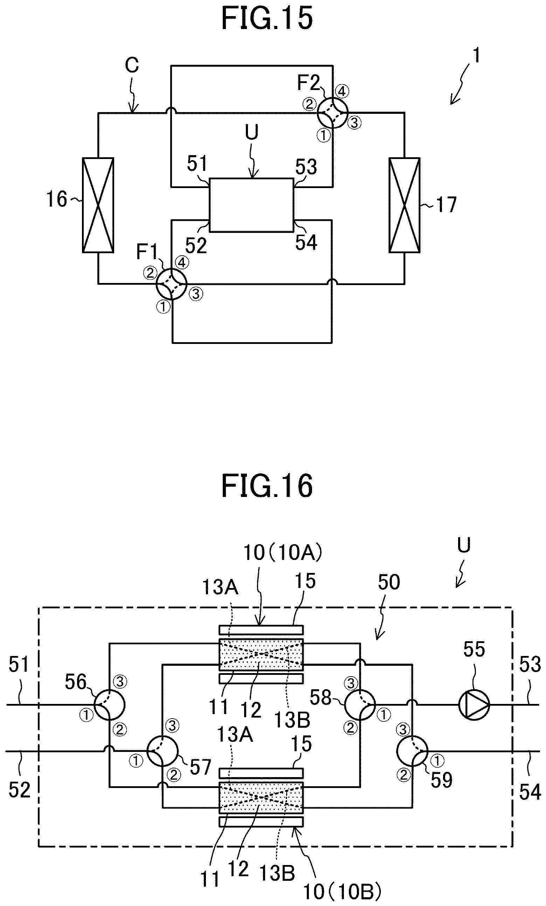

FIGS. 15 and 16 are a piping system diagram of the magnetic refrigeration apparatus (1) of this variation and a schematic configuration diagram of a magnetic refrigeration unit (U) of this variation. In FIGS. 15 and 16, the same components as those of the magnetic refrigeration apparatus (1) of the embodiment illustrated in FIG. 1 are denoted by the same reference numerals.

As illustrated in FIG. 15, the magnetic refrigeration apparatus (1) mainly includes the magnetic refrigeration unit (U), the first heat exchanger (16), the second heat exchanger (17), a first four-way switching valve (F1), and a second four-way switching valve (F2). The magnetic refrigeration unit (U), the first heat exchanger (16), and the second heat exchanger (17) are connected to each other through a heat medium pipe to form the heat medium circuit (C). Although not illustrated, the magnetic refrigeration apparatus (1) of this variation includes a control mechanism similar to the controller (30) of the above-described embodiment.

As illustrated in FIG. 16, the magnetic refrigeration unit (U) has two magnetic refrigeration modules (10) as solid-state refrigeration modules, a low-temperature outflow pipe (51), a low-temperature inflow pipe (52), a high-temperature outflow pipe (53), a high-temperature inflow pipe (54), and a unit-side pump (55). The magnetic refrigeration unit (U) has a low-temperature first three-way valve (56), a low-temperature second three-way valve (57), a high-temperature first three-way valve (58), and a high-temperature second three-way valve (59). The two magnetic refrigeration modules (10) include a first magnetic refrigeration module (10A) and a second magnetic refrigeration module (10B). In this variation, the unit-side pump (55) and the three-way valves (56, 57, 58, 59) form a heat medium conveyor (50).

Each of the first magnetic refrigeration module (10A) and the second magnetic refrigeration module (10B) has the housing (11) and the magnetic field modulator (15) which is the force field modulator.

As in the above-described embodiment, the housing (11) has the magnetic working substance (12) as the solid-state refrigerant substance, and the internal flow path (13) in which the heat medium flows while exchanging heat with the solid-state refrigerant substance (12). The magnetic working substance (12) includes the substances (12a to 12e) having different Curie temperatures at which the caloric effect is maximized, and the substances (12a to 12e) are arranged in descending order of the Curie temperature (i.e., in cascade) along the internal flow path (13).

As in the above-described embodiment, the magnetic field modulator (15) induces the caloric effect by making the magnetic field variation on the magnetic working substance (12) in the housing (11). The magnetic field modulator (15) includes the electromagnet capable of modulating the magnetic field, for example. The magnetic field modulator (15) performs the first modulation operation and the second modulation operation. In the first modulation operation, a predetermined magnetic field is applied to the magnetic working substance (22). In the second modulation operation, a magnetic field smaller than the predetermined magnetic field is applied, or the predetermined magnetic field is removed.

In the housing (11) of each magnetic refrigeration module (10), the first internal flow path (13A) and the second internal flow path (13B) are formed. The low-temperature end of the first internal flow path (13A) of the first magnetic refrigeration module (10A) is connected to the low-temperature outflow pipe (51) via the low-temperature first three-way valve (56). The low-temperature end of the second internal flow path (13B) of the first magnetic refrigeration module (10A) is connected to the low-temperature inflow pipe (52) via the low-temperature second three-way valve (57). The high-temperature end of the first internal flow path (13A) of the second magnetic refrigeration module (10B) is connected to the high-temperature inflow pipe (54) via the high-temperature second three-way valve (59). The high-temperature end of the second internal flow path (13B) of the second magnetic refrigeration module (10B) is connected to the high-temperature outflow pipe (53) via the high-temperature first three-way valve (58).

The unit-side pump (55) is provided in the high-temperature outflow pipe (53). The unit-side pump (55) is a one-way pump. The unit-side pump (55) conveys the heat medium toward downstream of the high-temperature outflow pipe (53).

A first port of the low-temperature first three-way valve (56) communicates with the low-temperature outflow pipe (51). A second port of the low-temperature first three-way valve (56) communicates with the low-temperature end of the first internal flow path (13A) of the second magnetic refrigeration module (10B). A third port of the low-temperature first three-way valve (56) communicates with the low-temperature end of the first internal flow path (13A) of the first magnetic refrigeration module (10A).

A first port of the low-temperature second three-way valve (57) communicates with the low-temperature inflow pipe (52). A second port of the low-temperature second three-way valve (57) communicates with the low-temperature end of the second internal flow path (13B) of the second magnetic refrigeration module (10B). A third port of the low-temperature second three-way valve (57) communicates with the low-temperature end of the second internal flow path (13B) of the first magnetic refrigeration module (10A).

A first port of the high-temperature first three-way valve (58) communicates with the high-temperature outflow pipe (53). A second port of the high-temperature first three-way valve (58) communicates with the high-temperature end of the second internal flow path (13B) of the second magnetic refrigeration module (10B). A third port of the high-temperature first three-way valve (58) communicates with the high-temperature end of the second internal flow path (13B) of the first magnetic refrigeration module (10A).

A first port of the high-temperature second three-way valve (59) communicates with the high-temperature inflow pipe (54). A second port of the high-temperature second three-way valve (59) communicates with the high-temperature end of the first internal flow path (13A) of the second magnetic refrigeration module (10B). A third port of the high-temperature second three-way valve (59) communicates with the high-temperature end of the first internal flow path (13A) of the first magnetic refrigeration module (10A).

Each three-way valve (56, 57, 58, 59) has the first port, the second port, and the third port. In the drawings, the first port of the three-way valve is denoted by an encircled numeral "1", the second port of the three-way valve is denoted by an encircled numeral "2", and the third port of the three-way valve is denoted by an encircled numeral "3."

Each three-way valve (56, 57, 58, 59) switches between a first state (indicated by solid lines in FIG. 16) and a second state (indicated by broken lines in FIG. 16). Each three-way valve (56, 57, 58, 59) in the first state causes the first port and the second port to communicate with each other. Each three-way valve (56, 57, 58, 59) in the second state causes the first port and the third port to communicate with each other.

In this variation, the first heat exchanger (16) illustrated in FIG. 15 is the indoor heat exchanger that exchanges heat between the heat medium and the indoor air. One end of the first heat exchanger (16) is connected to a second port of the first four-way switching valve (F1) through a pipe. The other end of the first heat exchanger (16) is connected to a second port of the second four-way switching valve (F2) through a pipe. The second heat exchanger (17) illustrated in FIG. 15 is the outdoor heat exchanger serving as the heat source. The second heat exchanger (17) exchanges heat between the heat medium and the outdoor air. One end of the second heat exchanger (17) is connected to a third port of the first four-way switching valve (F1) through a pipe. The other end of the second heat exchanger (17) is connected to a third port of the second four-way switching valve (F2) through a pipe.

The first four-way switching valve (F1) and the second four-way switching valve (F2) are switching mechanisms that switch the flow path of the heat medium in the heat medium circuit (C). The first four-way switching valve (F1) and second four-way switching valve (F2) of this variation switch the flow path of the heat medium in the indoor cooling operation, the indoor heating operation, and the defrosting operation. Each four-way switching valve (F1, F2) has the first port, the second port, the third port, and a fourth port. In the drawings, the first port of the four-way switching valve is denoted by an encircled numeral "1", the second port of the four-way switching valve is denoted by an encircled numeral "2", the third port of the four-way switching valve is denoted by an encircled numeral "3", and the fourth port of the four-way switching valve is denoted by an encircled numeral "4."

Each four-way switching valve (F1, F2) switches between a first state (state indicated by solid lines in FIG. 15) and a second state (state indicated by broken lines in FIG. 15). Each four-way switching valve (F1, F2) in the first state causes the first port and the second port to communicate with each other, and at the same time, causes the third port and the fourth port to communicate with each other. Each four-way switching valve (F1, F2) in the second state causes the first port and the third port to communicate with each other, and at the same time, causes the second port and the fourth port to communicate with each other.

The first port of the first four-way switching valve (F1) communicates with the high-temperature inflow pipe (54). The second port of the first four-way switching valve (F1) communicates with the first heat exchanger (16). The third port of the first four-way switching valve (F1) communicates with the second heat exchanger (17). The fourth port of the first four-way switching valve (F1) communicates with the low-temperature inflow pipe (52).

The first port of the second four-way switching valve (F2) communicates with the high-temperature outflow pipe (53). The second port of the second four-way switching valve (F2) communicates with the first heat exchanger (16). The third port of the second four-way switching valve (F2) communicates with the second heat exchanger (17). The fourth port of the second four-way switching valve (F2) communicates with the low-temperature outflow pipe (51).

The controller (30) of this variation is connected to the magnetic refrigeration unit (U) and each four-way switching valve (F1, F2) via a communication line. That is, the controller (30) controls the magnetic field modulator (15), the heat medium conveyor (50), and each four-way switching valve (F1, F2).

### <Operation of Magnetic Refrigeration Apparatus>

The magnetic refrigeration apparatus (1) of this variation performs the indoor cooling operation, the indoor heating operation, and the defrosting operation. In this variation, the first heat exchanger (16) is the indoor heat exchanger configured to exchange heat between the heat medium heated by the magnetic working substance (12) and the indoor air, and the second heat exchanger (17) is the outdoor heat exchanger configured to exchange heat between the heat medium cooled by the magnetic working substance (12) and the outdoor air. That is, in the indoor cooling operation, air in the indoor space is cooled. The indoor cooling operation corresponds to the cooling operation. In the indoor heating operation, air in the indoor space is heated. The indoor heating operation corresponds to the heating operation. In the defrosting operation, frost on the outdoor heat exchanger is melted.

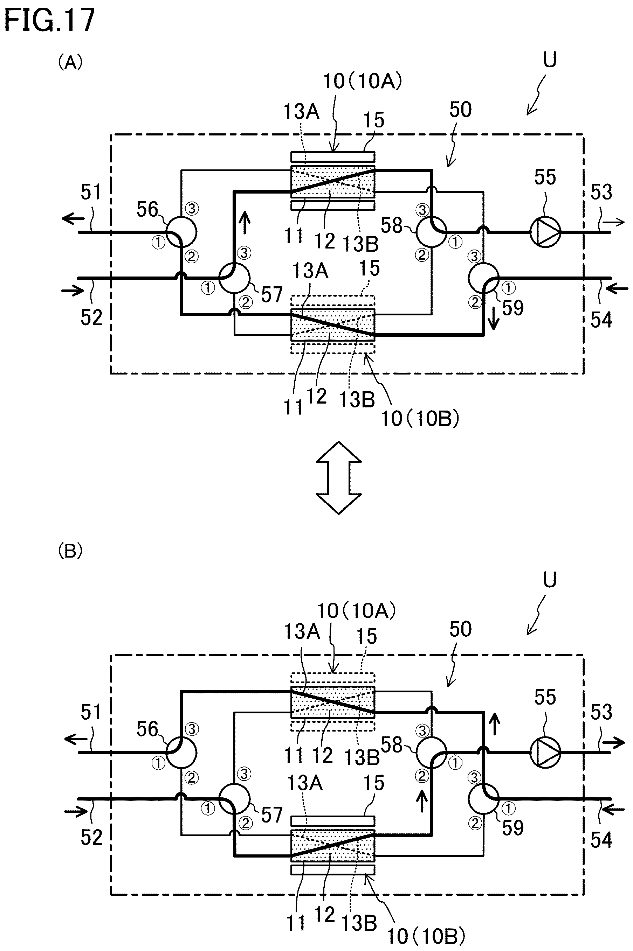

In the indoor cooling operation, the operation illustrated in (A) of FIG. 17 and the operation illustrated in (B) of FIG. 17 are alternately and repeatedly performed. The switching cycle of each operation is about 1 second.

In the operation illustrated in (A) of FIG. 17, the first magnetic refrigeration module (10A) performs the first modulation operation, and the second magnetic refrigeration module (10B) performs the second modulation operation. The low-temperature first three-way valve (56) is set to the first state, the low-temperature second three-way valve (57) is set to the second state, the high-temperature first three-way valve (58) is set to the second state, and the high-temperature second three-way valve (59) is set to the first state. The unit-side pump (55) operates.

In the operation illustrated in (B) of FIG. 17, the first magnetic refrigeration module (10A) performs the second modulation operation, and the second magnetic refrigeration module (10B) performs the first modulation operation. The low-temperature first three-way valve (56) is set to the second state, the low-temperature second three-way valve (57) is set to the first state, the high-temperature first three-way valve (58) is set to the first state, and the high-temperature second three-way valve (59) is set to the second state. The unit-side pump (55) operates.

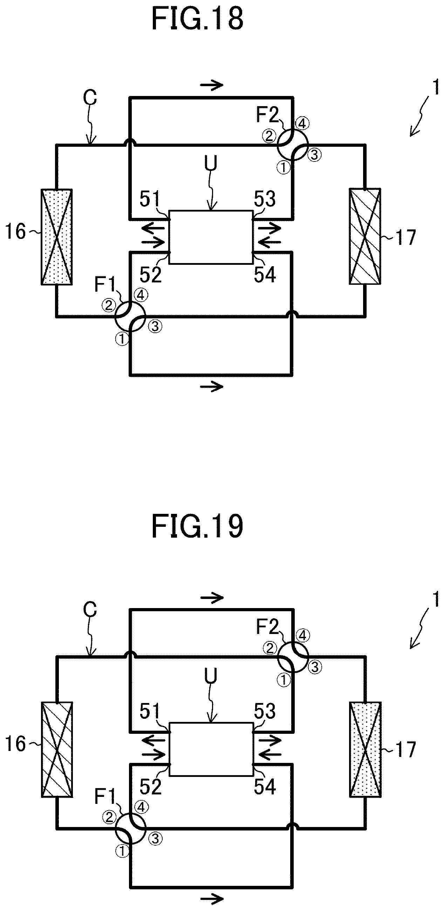

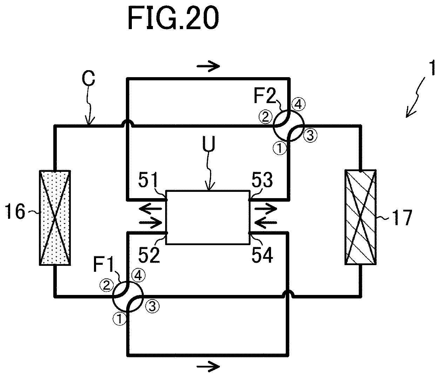

In the indoor cooling operation, the first four-way switching valve (F1) is set to the second state, and the second four-way switching valve (F2) is set to the second state, as illustrated in FIG. 18. This forms a "flow path where the heat medium cooled by each magnetic refrigeration module (10) flows through the low-temperature outflow pipe (51), the first heat exchanger (16), and the low-temperature inflow pipe (52), and the heat medium heated by each magnetic refrigeration module (10) flows through the high-temperature outflow pipe (53), the second heat exchanger (17), and the high-temperature inflow pipe (54)." For the sake of convenience, the flow of the heat medium in each operation is shown in the same drawing which is FIG. 18. In FIG. 18, one of the first heat exchanger (16) or the second heat exchanger (17), in which the heat medium dissipates heat, is hatched, and the other heat exchanger in which the heat medium absorbs heat is dotted. The same also applies to FIGS. 19 and 20 to be described later.

Specifically, the heat medium heated by the magnetic refrigeration unit (U) passes through the second four-way switching valve (F2) and flows through the second heat exchanger (17). In the second heat exchanger (17), i.e., the outdoor heat exchanger, the heat medium dissipates heat to the outdoor air. The heat medium having dissipated heat in the second heat exchanger (17) passes through the first four-way switching valve (F1), and then returns to the magnetic refrigeration unit (U).

The heat medium cooled by the magnetic refrigeration unit (U) passes through the second four-way switching valve (F2), and then flows through the first heat exchanger (16). In the first heat exchanger (16), i.e., the indoor heat exchanger, the heat medium absorbs heat from the indoor air. As a result, the indoor air is cooled. The heat medium having absorbed heat in the first heat exchanger (16) passes through the first four-way switching valve (F1), and then returns to the magnetic refrigeration unit (U).

In the indoor heating operation, the operation illustrated in (A) of FIG. 17 and the operation illustrated in (B) of FIG. 17 are also alternately and repeatedly performed. In the indoor heating operation, the first four-way switching valve (F1) is set to the first state, and the second four-way switching valve (F2) is set to the first state, as illustrated in FIG. 19. This forms a "flow path through which the heat medium heated by each magnetic refrigeration module (10) flows through the high-temperature outflow pipe (53), the first heat exchanger (16), and the high-temperature inflow pipe (54), and the heat medium cooled by each magnetic refrigeration module (10) flows through the low-temperature outflow pipe (51), the second heat exchanger (17), and the low-temperature inflow pipe (52)."

Specifically, the heat medium cooled by the magnetic refrigeration unit (U) passes through the second four-way switching valve (F2) and flows through the second heat exchanger (17). In the second heat exchanger (17), i.e., the outdoor heat exchanger, the heat medium absorbs heat from the outdoor air. The heat medium having absorbed heat in the second heat exchanger (17) passes through the first four-way switching valve (F1), and then returns to the magnetic refrigeration unit (U).

The heat medium heated by the magnetic refrigeration unit (U) passes through the second four-way switching valve (F2), and then flows through the first heat exchanger (16). In the first heat exchanger (16), i.e., the indoor heat exchanger, the heat medium dissipates heat to the indoor air. As a result, the indoor air is heated. The heat medium having dissipated heat in the first heat exchanger (16) passes through the first four-way switching valve (F1), and then returns to the magnetic refrigeration unit (U).

In the defrosting operation, the operation which is substantially similar to the indoor cooling operation is performed. That is, in the defrosting operation, the operation illustrated in (A) of FIG. 17 and the operation illustrated in (B) of FIG. 17 are alternately and repeatedly performed. The switching cycle of each operation is about 1 second. The defrosting operation is performed when a condition where frost is formed on the surface of the second heat exchanger (17), i.e., the outdoor heat exchanger, is satisfied, for example, during the indoor heating operation in winter.

In the defrosting operation, the first four-way switching valve (F1) is set to the second state, and the second four-way switching valve (F2) is set to the second state, as illustrated in FIG. 20. This forms a "flow path where the heat medium cooled by each magnetic refrigeration module (10) flows through the low-temperature outflow pipe (51), the first heat exchanger (16), and the low-temperature inflow pipe (52), and the heat medium heated by each magnetic refrigeration module (10) flows through the high-temperature outflow pipe (53), the second heat exchanger (17), and the high-temperature inflow pipe (54)."

Specifically, the heat medium heated by the magnetic refrigeration unit (U) passes through the second four-way switching valve (F2) and flows through the second heat exchanger (17). **In** the second heat exchanger (17), i.e., the outdoor heat exchanger, frost on the surface of the outdoor heat exchanger is melted by the heat medium flowing through the outdoor heat exchanger (17). The heat medium used for defrosting the outdoor heat exchanger passes through the first four-way switching valve (F1), and then returns to the magnetic refrigeration unit (U).

The heat medium cooled by the magnetic refrigeration unit (U) passes through the second four-way switching valve (F2), and then flows through the first heat exchanger (16). In the first heat exchanger (16), i.e., the indoor heat exchanger, the heat medium absorbs heat from the indoor air. The heat medium having absorbed heat in the first heat exchanger (16) passes through the first four-way switching valve (F1), and then returns to the magnetic refrigeration unit (U).

### <Features of Second Variation>

When the air cooling operation (cooling operation) is not required, the piping system illustrated in FIG. 19 may be configured without the four-way switching valves (F1, F2), and in the defrosting operation, the magnetic field modulator (15) and the heat medium conveyor (50) may be electrically controlled to switch the conveying direction of the heat medium in the internal flow path (13) with respect to the phase of the magnetic field variation to the direction opposite to that in the indoor heating operation (heating operation) in the operation illustrated in (A) and (B) of FIG. 17. With this configuration, the low-temperature-side heat exchanger can be defrosted at low cost while an increase in the size of the high-temperature-side heat exchanger or the complexity of the apparatus structure due to addition of, e.g., a valve or a tank is avoided.

### (Third Variation)

A third variation will be described. A magnetic refrigeration apparatus (1) of this variation is a solid-state refrigeration apparatus configured to adjust the temperature of a heat medium using a magnetocaloric effect, and is applied to, for example, an air conditioner. **In** this case, the magnetic refrigeration apparatus (1) adjusts the temperature of air in an air-conditioning target space. The air-conditioning target space is, for example, an indoor space.

### <Configuration of Magnetic Refrigeration Apparatus>

In the magnetic refrigeration apparatuses (1) of the above-described embodiment and first and second variations, the inside of the housing (11) formed of the hollow case or column is filled with the magnetic working substance (12), and using the magnetic field modulator (15) formed of the electromagnet capable of modulating the magnetic field, the magnetic field variation is made on the magnetic working substance (12) in the housing (11).

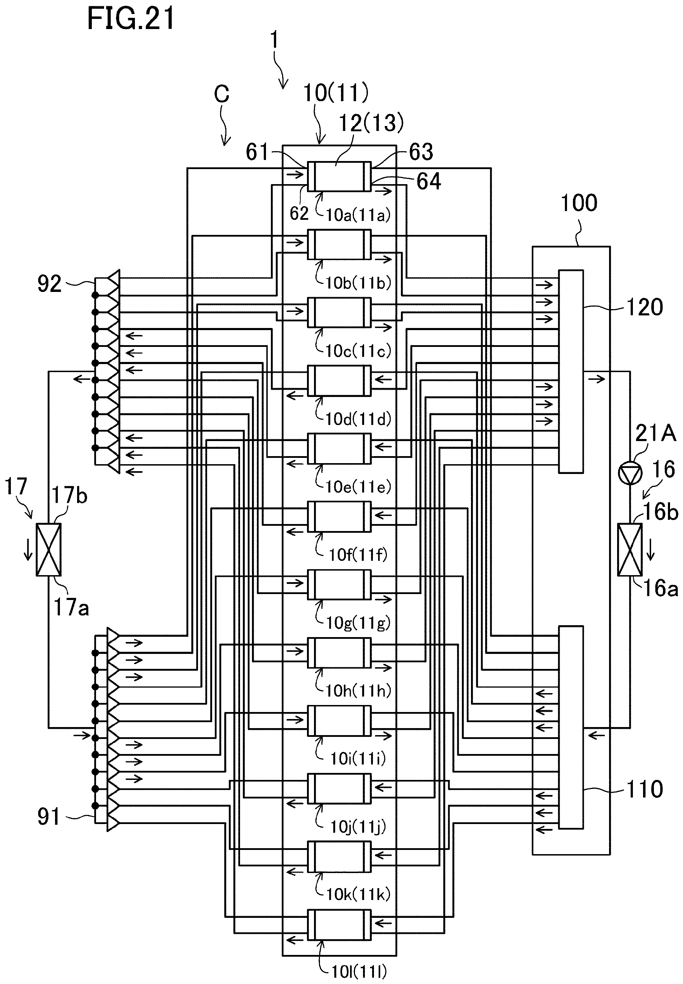

In contrast, the magnetic refrigeration apparatus (1) of this variation is a magnetic heat pump apparatus of a type in which a magnetic circuit rotates. Specifically, as illustrated in FIG. 21, the magnetic refrigeration apparatus (1) of this variation mainly includes a heat medium circuit (C) having the magnetic refrigeration module (10), the first heat exchanger (16), the second heat exchanger (17), and a heat medium pump (21A). The components of the heat medium circuit (C) are connected to each other through a heat medium pipe. The magnetic refrigeration apparatus (1) is the solid-state refrigeration apparatus configured to adjust the temperature of the heat medium using the caloric effect, and the magnetic refrigeration module (10) is a solid-state refrigeration module configured to adjust the temperature of the heat medium using the caloric effect.

The magnetic refrigeration module (10) is provided, for example, in an air conditioner configured to exchange heat with secondary refrigerant or air. The application of the magnetic refrigeration module (10) is not limited to above, and the magnetic refrigeration module (10) may be provided, for example, in the magnetic refrigeration system (1) configured as a dedicated chiller.

The magnetic refrigeration module (10) includes the annular housing (11) having a plurality of partial housings (11a to 11l) that house the magnetic working substance (12) as the solid-state refrigerant substance and form the internal flow path (13) through which the heat medium flows. The magnetic refrigeration module (10) applies or removes the magnetic field, which is the force field, to or from the magnetic working substance (12) to produce the magnetocaloric effect, thereby heating or cooling the heat medium flowing through the internal flow path (13).

Also in this variation, the magnetic working substance (12) includes the substances (12a to 12e) having different Curie temperatures at which the caloric effect is maximized, and the substances (12a to 12e) are arranged in descending order of the Curie temperature (i.e., in cascade) along the internal flow path (13) in the partial housings (11a to 11l).

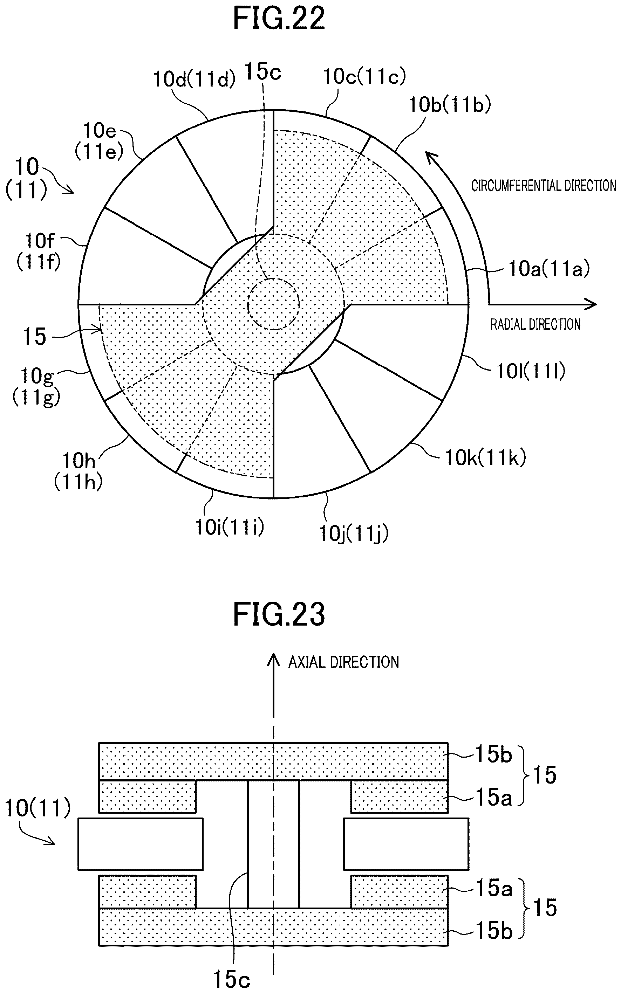

As illustrated in FIGS. 21 and 22, the magnetic refrigeration module (10) includes, for example, 12 unit modules (10a to 10l). The components of the unit modules (10a to 10l) are housed in the partial housings (11a to 11l), respectively. In this embodiment, each partial housing (11a to 11l) has, for example, an annular fan shape, but is not limited thereto. The partial housing may have, for example, a fan or trapezoid shape. The partial housings (11a to 11l) are combined into the annular shape, thereby forming the annular housing (11) of the magnetic refrigeration module (10). The thickness of each partial housing (11a to 11l) is set to such a thickness that flux leakage is less likely to occur and the required volume of the housing can be ensured. In the following description, when the partial housing (11a) is mentioned, the partial housing (11a) refers to any one of the partial housings (11a to 11l), and similarly, when the unit module (10a) is mentioned, the unit module (10a) refers to any one of the unit modules (10a to 10l).

In this variation, as illustrated in FIGS. 22 and 23, the magnetic field modulator (15) as the force field modulator is arranged so as to sandwich the magnetic refrigeration module (10) in the axial direction of the annular housing (11). The magnetic field modulator (15) has an annular magnet (15a) which is a force field generator disposed in the vicinity of the magnetic refrigeration module (10), a yoke (15b) that supports the annular magnet (15a) and forming a magnetic path, and a rotation mechanism (15c). The rotation mechanism (15c) is disposed so as to extend in the axial direction of the annular housing (11) through the center opening of the magnetic refrigeration module (10). The magnet (15a) is rotated in the circumferential direction of the annular housing (11) by the rotation mechanism (15c). The number of magnets (15a) (pair of magnets sandwiching the magnetic refrigeration module (10) in the axial direction of the annular housing (11)) arranged is equal to the number of poles of the magnetic circuit. In this example, two magnets (15a) are arranged so as to overlap with the area of three partial housings (11a). In this example, the magnets (15a) and the unit modules (10a) are arranged at equal intervals in the circumferential direction about the same axis. The annular housing (11), i.e., the magnetic refrigeration module (10), may be fixed.

In the magnetic refrigeration module (10) of this variation, the unit module (10a) excited by the magnet (15a) changes from moment to moment as the rotation mechanism (15c) rotates, and therefore, the magnet rotation type magnetic refrigeration module (10) is formed. In FIGS. 21 and 22, the unit modules (10a, 10b, 10c, 10g, 10h, 10i) are excited, and the unit modules (10d, 10e, 10f, 10j, 10k, 10l) are demagnetized.

As illustrated in FIG. 21, each unit module (10a to 10l) forming the magnetic refrigeration module (10) has a low-temperature-side inflow path (61), a low-temperature-side outflow path (62), a high-temperature-side inflow path (63), and a high-temperature-side outflow path (64). The inflow paths (61, 63) and the outflow paths (62, 64) communicate with the internal flow path (13) in the partial housings (11a to 11l) of the unit modules (10a to 10l). The heat medium having flowed in from the low-temperature-side inflow path (61) flows through the internal flow path (13) in the partial housing (11a) and flows out of the high-temperature-side outflow path (64). The heat medium having flowed in from the high-temperature-side inflow path (63) flows through the internal flow path (13) in the partial housing (11a) and flows out of the low-temperature-side outflow path (62).

**In** this variation, the first heat exchanger (16) is the indoor heat exchanger configured to exchange heat between the heat medium heated by the magnetic refrigeration module (10) and the indoor air. The first heat exchanger (16) has a first outflow port (16a) connected to the high-temperature-side inflow path (63) of the magnetic refrigeration module (10), and a first inflow port (16b) connected to the high-temperature-side outflow path (64) of the magnetic refrigeration module (10). A high-pressure-side multi-way switching valve (110) is provided in the heat medium pipe between the first outflow port (16a) and the high-temperature-side inflow path (63) of each unit module (10a to 10l). A low-pressure-side multi-way switching valve (120) is provided in the heat medium pipe between the first inflow port (16b) and the high-temperature-side outflow path (64) of each unit module (10a to 10l). **In** this variation, the high-pressure-side multi-way switching valve (110) and the low-pressure-side multi-way switching valve (120) are integrated to form a rotary valve type multi-way switching valve (100).

**In** this variation, the second heat exchanger (17) is the outdoor heat exchanger configured to exchange heat between the heat medium cooled by the magnetic refrigeration module (10) and the outdoor air. The second heat exchanger (17) has a second outflow port (17a) connected to the low-temperature-side inflow path (61) of the magnetic refrigeration module (10), and a second inflow port (17b) connected to the low-temperature-side outflow path (62) of the magnetic refrigeration module (10). A first check valve (91) is provided in the heat medium pipe between the second outflow port (17a) and the low-temperature-side inflow path (61) of each unit module (10a to 10l). A second check valve (92) is provided in the heat medium pipe between the second inflow port (17b) and the low-temperature-side outflow path (62) of each unit module (10a to 10l).

The heat medium pump (21A) allows the heat medium to flow between the magnetic refrigeration module (10) and each heat exchanger (60, 70). The heat medium pump (21A) is provided, for example, in the heat medium pipe between the low-pressure-side multi-way switching valve (120) of the rotary valve type multi-way switching valve (100) and the second heat exchanger (17).

In this variation, the heat medium pump (21A) and the rotary valve type multi-way switching valve (100) form the heat medium conveyor.

### <Operation of Magnetic Refrigeration Apparatus>

In the magnetic refrigeration system (1) illustrated in FIG. 21, the check valves (91, 92) and the rotary valve type multi-way switching valve (100) are controlled, and the magnetic field is applied to or removed from the housing (11) of the magnetic refrigeration module (10) (unit modules (10a to 10l)) in accordance with such control. In this manner, the warm thermal energy and the cold thermal energy are supplied.

Hereinafter, more specific description will be provided with reference to an example where the unit modules (20a, 20b, 20c, 20g, 20h, 20i) are excited and the unit modules (20d, 20e, 20f, 20j, 20k, 20l) are demagnetized as illustrated in FIGS. 21 and 22. The flow of the heat medium is indicated by arrows in FIG. 21.

First, the heat medium having flowed out of the second outflow port (17a) of the second heat exchanger (17) selectively flows into the low-temperature-side inflow paths (61) of the excited unit modules (10a, 10b, 10c, 10g, 10h, 10i) by controlling the first check valve (91). The heat medium is heated by heat exchange with the magnetic working substance (12) in a heat generation state in the unit modules (10a, 10b, 10c, 10g, 10h, 10i), and then flows out of the high-temperature-side outflow paths (64).

The heat medium having flowed out of the high-temperature-side outflow paths (64) of the unit modules (10a, 10b, 10c, 10g, 10h, 10i) flows into the first inflow port (16b) of the first heat exchanger (16) through the heat medium pump (21A) by controlling the low-pressure-side multi-way switching valve (120). The heat medium exchanges heat with the secondary refrigerant flowing through the heat source unit (not illustrated) such as the cooling tower, and flows out of the first outflow port (16a) of the first heat exchanger (16).

The heat medium having flowed out of the first outflow port (16a) of the first heat exchanger (16) selectively flows into the high-temperature-side inflow paths (63) of the demagnetized unit modules (10d, 10e, 10f, 10j, 10k, 10l) by controlling the high-pressure-side multi-way switching valve (110). The heat medium is cooled by heat exchange with the magnetic working substance (12) in a heat absorbing state in the unit modules (10d, 10e, 10f, 10j, 10k, 10l), and then flows out of the low-temperature-side outflow paths (62).

The heat medium having flowed out of the low-temperature-side outflow paths (62) of the unit modules (10d, 10e, 10f, 10j, 10k, 10l) flows into the second inflow port (17b) of the second heat exchanger (17) by controlling the second check valve (92). The heat medium exchanges heat with the secondary refrigerant flowing through the utilization unit (not illustrated) such as the air handling unit, and flows out of the second outflow port (17a) of the second heat exchanger (17).

### <Features of Third Variation>

In the heating operation of this variation, the above-described control of the flow of the heat medium is repeated while selectively changing the unit module (10a) to be excited or demagnetized by the magnetic field modulator (15). In addition, during when the heating operation, the condition where frost is formed on the surface of the low-temperature-side heat exchanger (second heat exchanger (17)) is satisfied, the defrosting operation is performed. In the defrosting operation, the conveying direction of the heat medium in the internal flow path (13) with respect to the phase of the magnetic field variation is switched to the direction opposite to that in the heating operation, for example, by the electric control of the magnetic field modulator (15) and the rotary valve type multi-way switching valve (100). With this configuration, the low-temperature-side heat exchanger can be defrosted at low cost while an increase in the size of the high-temperature-side heat exchanger or the complexity of the apparatus structure due to addition of, e.g., a valve or a tank is avoided.

### (Fourth Variation)

In the magnetic refrigeration apparatuses (1) of the above-described embodiments and first to third variations, the magnetic field modulator (15) is driven independently of the reciprocating pump (21) as the heat medium conveyor and various valves, and these components are electrically synchronized with each other. In this configuration, the heat medium conveying direction in the internal flow path (13) with respect the phase of the magnetic field variation is electrically switched.

In contrast, in this variation, the magnetic field modulator (15) is driven in conjunction with the reciprocating pump (21) as the heat medium conveyor and various valves, for example, using a phase adjustment mechanism such as a shaft, a belt, or a gear. In this configuration, the magnetic field modulator (15) and the heat medium conveyor are mechanically controlled to switch the heat medium conveying direction in the internal flow path (13) with respect the phase of the magnetic field variation.

### <Configuration of Magnetic Refrigeration Apparatus>

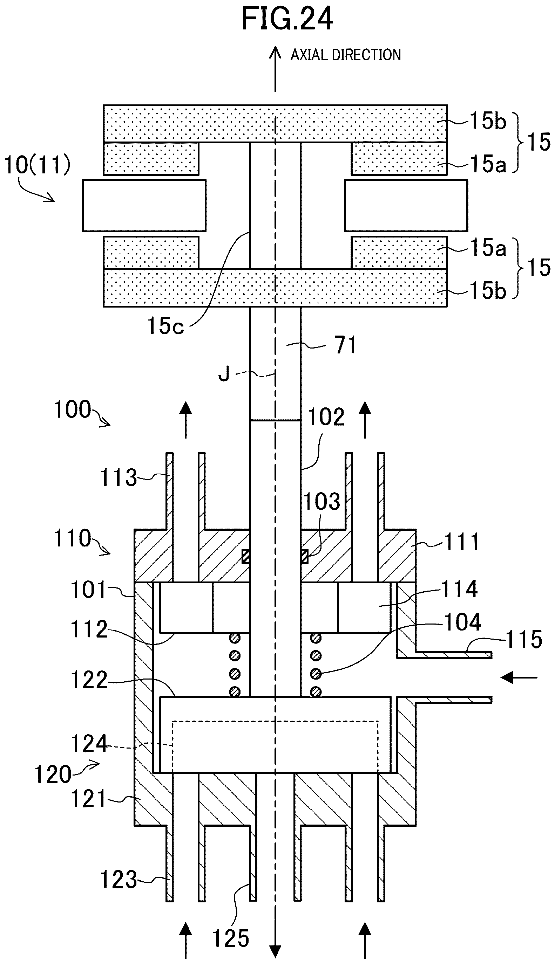

FIG. 24 is a schematic view of the configuration of a main part of a magnetic refrigeration apparatus (1) of this variation. In FIG. 24, the same components as those of the magnetic refrigeration apparatus (1) of the third variation illustrated in FIGS. 21 to 23 are denoted by the same reference numerals.

As illustrated in FIG. 24, in the magnetic refrigeration apparatus of this variation, the rotary magnetic circuit (magnetic field modulator (15)) and the rotary valve type multi-way switching valve (100) of the magnetic refrigeration apparatus (1) of the third variation are connected to each other via a connection shaft (71), whereby timing (synchronization) between the magnetic field variation and the heat medium flow is made.

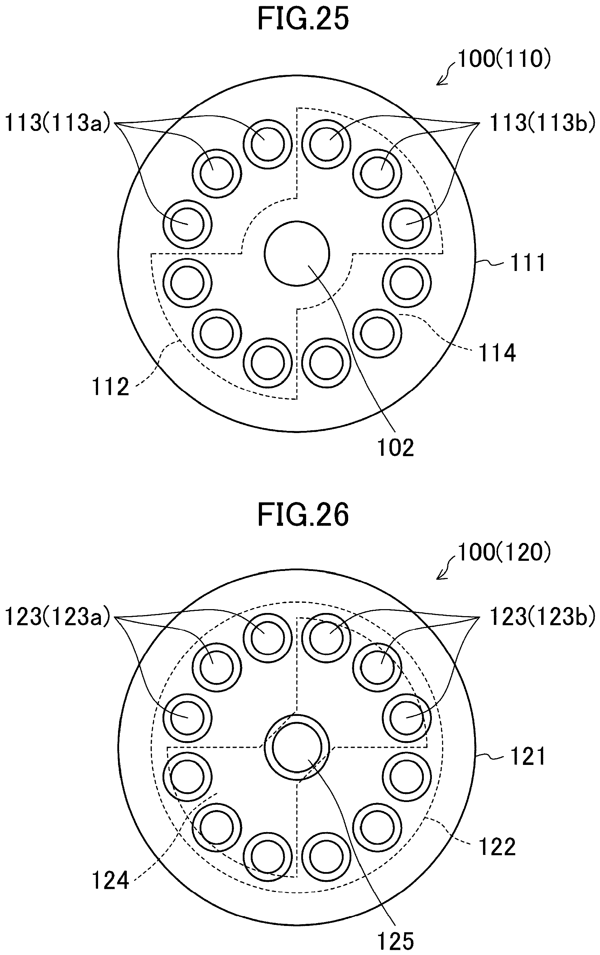

In the rotary valve type multi-way switching valve (100) illustrated in FIGS. 24 to 26, the high-pressure-side multi-way switching valve (110) and the low-pressure-side multi-way switching valve (120) are integrally provided in the same valve box (101). The flow of the heat medium is indicated by arrows in FIG. 24.

The rotary valve type multi-way switching valve (100) mainly includes the valve box (101), a rotary shaft (102), a high-pressure-side inlet port (115), a low-pressure-side outlet port (125), a high-pressure-side valve plate (111), a high-pressure-side valve body (112), a low-pressure-side valve plate (121), and a low-pressure-side valve body (122). The valve box (101) is made of, for example, acrylic resin. The rotary shaft (102) is made of, for example, stainless steel. The high-pressure-side valve plate (111) and the low-pressure-side valve plate (121) are made of, for example, aluminum. The high-pressure-side valve body (112) and the low-pressure-side valve body (122) are made of, for example, fluororesin such as PTFE.

In this variation, an "axial direction" is a direction in which the rotary shaft (102) (axis (J)) extends, a "radial direction" is a direction orthogonal to the rotary shaft (102), and a "circumferential direction" is the circumferential direction of a circle centered on the rotary shaft (102). The same also applies to a fifth variation to be described later.

The high-pressure-side valve plate (111) is disposed at one end (upper end in FIG. 24) of the valve box (101) in the axial direction. The low-pressure-side valve plate (121) is disposed at the other end (lower end in FIG. 24) of the valve box (101) in the axial direction. The high-pressure-side valve body (112) is disposed inside the high-pressure-side valve plate (111) in the valve box (101). The low-pressure-side valve body (122) is disposed inside the low-pressure-side valve plate (121) in the valve box (101).

The rotary shaft (102) extends from the outside to the inside of the valve box (101) so as to penetrate a center portion of the high-pressure-side valve plate (111). The rotary shaft (102) is rotated by a drive rotation mechanism (not illustrated). A seal member (103) such as a mechanical seal is provided between the rotary shaft (102) and the high-pressure-side valve plate (111). Inside the valve box (101), the high-pressure-side valve body (112) and the low-pressure-side valve body (122) are attached to the rotary shaft (102). The high-pressure-side valve body (112) and the low-pressure-side valve body (122) are rotatable together with the rotary shaft (102).

The high-pressure-side valve body (112) and the low-pressure-side valve body (122) are rotationally driven by the same rotary shaft (102). Thus, the high-pressure-side valve body (112) and the low-pressure-side valve body (122) rotate at the same number of rotations in the same direction. A relative positional relationship between the high-pressure-side valve body (112) and the low-pressure-side valve body (122) does not change by the rotation.

The high-pressure-side inlet port (115) is located in a side portion of the valve box (101) in the radial direction. Thus, the inside of the valve box (101) is held at high pressure by communicating with the high-pressure-side inlet port (115). The low-pressure-side outlet port (125) is located at a center portion of the low-pressure-side valve plate (121).

The high-pressure-side valve plate (111) has a plurality of high-pressure-side outlet ports (113) formed so as to surround the rotary shaft (102). Ahigh-pressure-side flow path (114) is formed in the high-pressure-side valve body (112). The high-pressure-side flow path (114) has a structure open to the inside of the valve box (101). The high-pressure-side flow path (114) is connected to at least one port (113a) of the high-pressure-side outlet ports (113) in accordance with the rotation position of the high-pressure-side valve body (112), and selectively allows the port (113a) to communicate with the high-pressure-side inlet port (115). The high-pressure-side valve body (112) closes at least one port (113b) of the high-pressure-side outlet ports (113), which is lower in pressure than the inside of the valve box (101), in accordance with the rotation position. The high-pressure-side valve body (112) is attracted toward and comes close contact with the high-pressure-side valve plate (111) by a pressure difference between the port (113b) and the inside of the valve box (101), so that fluid leakage can be prevented.

The high-pressure-side valve body (112) is fixed in the circumferential direction of the rotary shaft (102), but is not fixed in the axial direction of the rotary shaft (102). For example, the cross-sectional shape of the rotary shaft (102) perpendicular to the axial direction may be a D-shape, a through-hole having the same D-shape may be provided in the high-pressure-side valve body (112), and the rotary shaft (102) may be inserted into the through-hole, whereby the high-pressure-side valve body (112) is fixed in the circumferential direction of the rotary shaft (102) and is movable in the axial direction of the rotary shaft (102). This can avoid the rotary shaft (102) from being attracted toward the high-pressure-side valve plate (111) together with the high-pressure-side valve body (112) when the high-pressure-side valve body (112) is attracted toward the high-pressure-side valve plate (111).

The low-pressure-side valve plate (121) has a plurality of low-pressure-side inlet ports (123) formed so as to surround the low-pressure-side outlet port (125). A low-pressure-side flow path (124) is formed in the low-pressure-side valve body (122). The low-pressure-side valve body (122) closes at least one port (123a) of the low-pressure-side inlet ports (123), which is higher in pressure, in accordance with the rotation position. The low-pressure-side flow path (124) is connected to at least one port (123b), which is lower in pressure than the inside of the valve box (101), in accordance with the rotation position of the low-pressure-side valve body (122), and selectively allows the port (123b) to communicate with the low-pressure-side outlet port (125). The low-pressure-side flow path (124) has a structure closed from the inside of the valve box (101). In other words, the high pressure in the valve box (101) and the low pressure in the low-pressure-side flow path (124) (inside the low-pressure-side valve body (122)) are separated from each other. Thus, the low-pressure-side valve body (122) is attracted toward and comes close contact with the low-pressure-side valve plate (121) by a pressure difference between the inside of the low-pressure-side valve body (122) and the inside of the valve box (101), so that fluid leakage can be prevented.

The low-pressure-side valve body (122) is fixed in the circumferential direction of the rotary shaft (102), but is not fixed in the axial direction of the rotary shaft (102). For example, the cross-sectional shape of the rotary shaft (102) perpendicular to the axial direction may be a D-shape, a through-hole having the same D-shape may be provided in the low-pressure-side valve body (122), and the rotary shaft (102) may be inserted into the through-hole, whereby the low-pressure-side valve body (122) is fixed in the circumferential direction of the rotary shaft (102) and is movable in the axial direction of the rotary shaft (102). This can avoid the rotary shaft (102) from being attracted toward the low-pressure-side valve plate (121) together with the low-pressure-side valve body (122) when the low-pressure-side valve body (122) is attracted toward the low-pressure-side valve plate (121).

As described above, the high-pressure-side valve body (112) and the low-pressure-side valve body (122) are formed as separate members and can move independently in the axial direction (can slide relative to the rotary shaft (102)), and therefore, attraction acting on the high-pressure-side valve body (112) and the low-pressure-side valve body (122) does not cancel each other. Further, each valve body (112, 122) is movable in the axial direction, and therefore, in a case where a spring (104) is placed between the valve bodies (112, 122), each valve body (112, 122) can be brought into close contact with the corresponding valve plate (111, 121) by the elastic force of the spring (104).

The low-pressure-side valve body (122) may include a mechanism that thermally insulates the inside of the valve box (101) from the low-pressure-side flow path (124). As one example, at least part of the low-pressure-side valve body (122) may be made of a heat insulating material. As the heat insulating material, resin exhibiting low friction and excellent slidability, such as PTFE or POM, may be used.

In the heat medium circuit (C) illustrated in FIG. 21, the high-pressure-side outlet port (113) of the high-pressure-side multi-way switching valve (110) is connected to the high-temperature-side inflow path (63) of the magnetic refrigeration module (10) (unit modules (10a to 10l)). The low-pressure-side inlet port (123) of the low-pressure-side multi-way switching valve (120) is connected to the high-temperature-side outflow path (64) of the magnetic refrigeration module (10). Here, the high-pressure-side outlet port (113) and the low-pressure-side inlet port (123) connected to the same unit module (10a to 10l) are not simultaneously "opened." Specifically, for the high-pressure-side outlet port (113) and the low-pressure-side inlet port (123) connected to the same unit module (10a to 10l), when one of the ports is "opened", the other port is "closed", and when one of the ports is "closed", the other port is "opened" or "closed."

In a case where the internal pressure of the valve box (101) is low immediately after the start of the operation of the magnetic refrigeration apparatus (1), or in a case where the valve body (112, 122) is pressed against and brought into close contact with the valve plate (111, 121) in a direction opposite to the direction of gravitation, close-contact force may be insufficient and fluid leakage may be caused accordingly.

For this reason, the spring (104) is supplementarily disposed inside the valve box (101) to increase the close-contact force between the valve body (112, 122) and the valve plate (111, 121). In the normal operation of the magnetic refrigeration apparatus (1), the high pressure in the valve box (101) is used to generate the close-contact force, and therefore, the elastic force of the spring (104) may be at such a level that the valve body (112, 122) weakly contacts the valve plate (111, 121). This can reduce wear of the valve body (112, 122) due to the elastic force of the spring (104).

Specifically, the spring (104) is placed between the high-pressure-side valve body (112) and the low-pressure-side valve body (122). The spring (104) extends in the axial direction while surrounding the outer periphery of the rotary shaft (102). One end of the spring (104) is attached to the high-pressure-side valve body (112), and the other end of the spring (104) is attached to the low-pressure-side valve body (122). In this configuration, the spring (104) can press the high-pressure-side valve body (112) against the high-pressure-side valve plate (111) and press the low-pressure-side valve body (122) against the low-pressure-side valve plate (121) without providing another member such as a spring retainer. Further, the spring (104) rotates integrally with the high-pressure-side valve body (112) and the low-pressure-side valve body (122), and therefore, it is not necessary to provide a sliding portion, for example, between the spring (104) and the valve body (112, 122) or between the spring (104) and the valve box (101). Thus, friction torque and wear can be avoided.

### <Features of Fourth Variation>

In the magnetic refrigeration apparatus (1) of this variation, the shaft (rotation mechanism (15c)) of the magnetic field modulator (15) is connected to the rotary shaft (102) of the rotary valve type multi-way switching valve (100) via the connection shaft (71). Thus, the magnetic field modulator (15) and the rotary valve bodies (high-pressure-side valve body (112) and low-pressure-side valve body (122)) are rotated by the same shaft (hereinafter referred to as a common shaft). On the other hand, the magnetic refrigeration module (10) is fixed.

In general, the body (valve box (101) and valve plates (high-pressure-side valve plate (111) and low-pressure-side valve plate (121))) of the rotary valve type multi-way switching valve (100) is fixed. In this variation, the body of the rotary valve type multi-way switching valve (100) is rotated about the common shaft. Thus, the port position of the valve plate (high-pressure-side valve plate (111) and low-pressure-side valve plate (121)) moves in the rotation direction, and therefore, the timing of the heat medium flow can be changed (i.e., the phase can be shifted).

The rotary valve type multi-way switching valve (100) is connected to the magnetic refrigeration module (10), the heat medium pump (21A), etc. through the pipe. Use of a flexible pipe (e.g., resin tube) allows the body of the rotary valve type multi-way switching valve (100) to be easily rotated. A rotation angle for the phase adjustment is usually within ±90° in a case where the bipolar magnet (15a) is used. Thus, the maximum rotation angle of the body of the rotary valve type multi-way switching valve (100) in the defrosting operation is also about 90°.

Further, by using, for example, a stepping motor or a servo motor for the rotation of the body of the rotary valve type multi-way switching valve (100), arbitrary angle control can be performed.

The configuration described above enables the phase adjustment (switching of the conveying direction of the heat medium in the internal flow path (13) with respect to the phase of the magnetic field variation) even during the rotation of the magnetic field modulator (15) and the rotary valve type multi-way switching valve (100).

### (Fifth Variation)

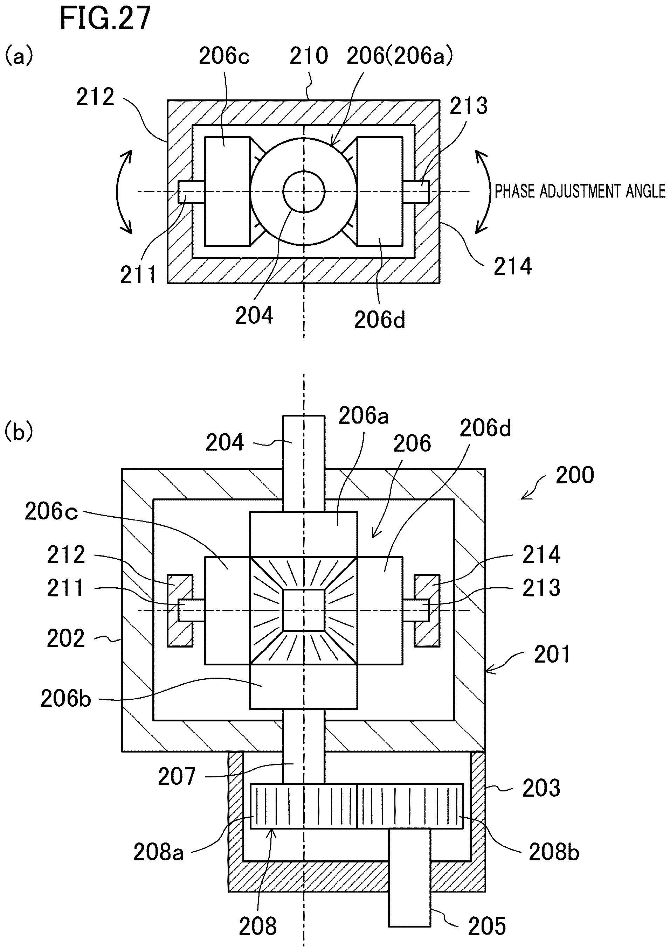

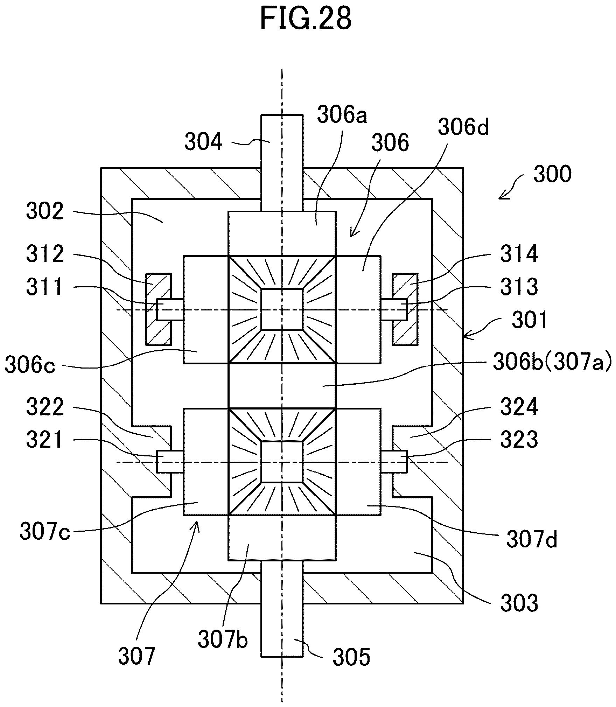

A magnetic refrigeration apparatus (1) of this variation differs from that of the fourth variation in that a phase adjustment mechanism (200, 300) as illustrated in FIG. 27 or FIG. 28 is placed between the rotary magnetic circuit (magnetic field modulator (15)) and the rotary valve type multi-way switching valve (100).

The phase adjustment mechanism (200) illustrated in FIG. 27 has, in a casing (201), four bevel gears (206a, 206b, 206c, 206d) (collectively referred to as a bevel gear group (206)) and two spur gears (208a, 208b) (collectively referred to as a spur gear group (208)). The bevel gear group (206) is housed in an upper casing (202), and the spur gear group (208) is housed in a lower casing (203). An input shaft (204), one end of which is supported by the bevel gear group (206) (bevel gear (206a)), is provided so as to penetrate a top portion of the upper casing (202). An output shaft (205), one end of which is supported by the spur gear group (208) (spur gear (208b)), is provided so as to penetrate a bottom portion of the lower casing (203). A connection shaft (207), one end of which is supported by the bevel gear group (206) (bevel gear (206b)) and the other end of which is supported by the spur gear group (208) (spur gear (208a)), is provided so as to penetrate a bottom portion of the upper casing (202) (top portion of the lower casing (203)).

The upper drawing of FIG. 27 illustrates a cross-sectional configuration of the phase adjustment mechanism (200) as viewed in the axial direction, and the lower drawing of FIG. 27 illustrates a cross-sectional configuration of the phase adjustment mechanism (200) as viewed in the radial direction.

The bevel gear group (206) performs the phase adjustment (switching of the conveying direction of the heat medium in the internal flow path (13) with respect to the phase of the magnetic field variation). The spur gear group (208) changes the rotation direction of the output shaft (205) coaxial with the rotary shaft (102) of the rotary valve type multi-way switching valve (100) to the same direction as that of the input shaft (204) coaxial with the shaft (rotation mechanism (15c)) of the magnetic field modulator (15). Two bevel gears (206c, 206d) of the bevel gear group (206) are placed rotatably relative to the input shaft (204). The two bevel gears (206c, 206d) are rotated to change a phase difference (hereinafter referred to as a phase rotation angle) between the input shaft (204) and the output shaft (205). The shafts (211, 213) of the bevel gears (206c, 206d) are supported by bearings (212, 214) provided on a support member (210) in the upper casing (202). When the rotation angle (hereinafter referred to as a phase adjustment angle) of the bevel gear (206c, 206d) is changed, the phase rotation angle twice as great as the phase adjustment angle is obtained at the output shaft (205) in the direction opposite to the rotation direction of the bevel gear (206c, 206d). For example, by using a stepping motor or a servo motor for controlling the phase adjustment angle, arbitrary angle control can be performed. The configuration described above enables the phase adjustment (switching of the conveying direction of the heat medium in the internal flow path (13) with respect to the phase of the magnetic field variation) even during the rotation of the magnetic field modulator (15) and the rotary valve type multi-way switching valve (100). Further, the body of the rotary valve type multi-way switching valve (100) remains fixed, and therefore, there is no limitation on, e.g., piping.

The phase adjustment mechanism (300) illustrated in FIG. 28 may be formed by replacing the spur gear group (208) of the phase adjustment mechanism (200) illustrated in FIG. 27 with a bevel gear. FIG. 28 illustrates a cross-sectional configuration of the phase adjustment mechanism (300) as viewed in the radial direction.

The phase adjustment mechanism (300) includes, in a casing (301), a first bevel gear group (306) including four bevel gears (306a, 306b, 306c, 306d) and a second bevel gear group (307) including four bevel gears (307a, 307b, 307c, 307d). The first bevel gear group (306) is housed in an upper space (302) of the casing (301), and the second bevel gear group (307) is housed in a lower space (303) of the casing (301). An input shaft (304), one end of which is supported by the first bevel gear group (306) (bevel gear (306a)), is provided so as to penetrate a top portion of the casing (301). An output shaft (305), one end of which is supported by the second bevel gear group (307) (bevel gear (307b)), is provided so as to penetrate a bottom portion of the casing (301). The bevel gear (306b) facing the bevel gear (306a) in the first bevel gear group (306) and the bevel gear (307a) facing the bevel gear (307b) in the second bevel gear group (307) are integrally formed.

The first bevel gear group (306) performs the phase adjustment (switching of the conveying direction of the heat medium in the internal flow path (13) with respect to the phase of the magnetic field variation). The second bevel gear group (307) changes the rotation direction of the output shaft (305) coaxial with the rotary shaft (102) of the rotary valve type multi-way switching valve (100) to the same direction as that of the input shaft (304) coaxial with the shaft (rotation mechanism (15c)) of the magnetic field modulator (15).

Two bevel gears (306c, 306d) of the first bevel gear group (306) are placed rotatably relative to the input shaft (304), and the two bevel gears (306c, 306d) are rotated to change a phase difference (hereinafter referred to as a phase rotation angle) between the input shaft (304) and the output shaft (305). The shafts (311, 313) of the bevel gears (306c, 306d) are supported by bearings (312, 314) provided on a support member in the upper space (302). When the rotation angle (hereinafter referred to as a phase adjustment angle) of the bevel gear (306c, 306d) is changed, the phase rotation angle twice as great as the phase adjustment angle is obtained at the output shaft (305) in the direction opposite to the rotation direction of the bevel gear (306c, 306d). For example, by using a stepping motor or a servo motor for controlling the phase adjustment angle, arbitrary angle control can be performed.

Two bevel gears (307c, 307d) of the second bevel gear group (307) are placed rotatably relative to the output shaft (305). The shafts (321, 323) of the bevel gears (307c, 307d) are supported by bearings (322, 324) provided on a sidewall portion of the casing (301).

The configuration described above enables the phase adjustment (switching of the conveying direction of the heat medium in the internal flow path (13) with respect to the phase of the magnetic field variation) even during the rotation of the magnetic field modulator (15) and the rotary valve type multi-way switching valve (100). Further, the body of the rotary valve type multi-way switching valve (100) remains fixed, and therefore, there is no limitation on, e.g., piping. In addition, the input shaft (304) and the output shaft (305) can be arranged coaxially, and therefore, the phase adjustment mechanism (300) can be easily placed between the rotary magnetic circuit (magnetic field modulator (15)) and the rotary valve type multi-way switching valve (100).

### (Sixth Variation)

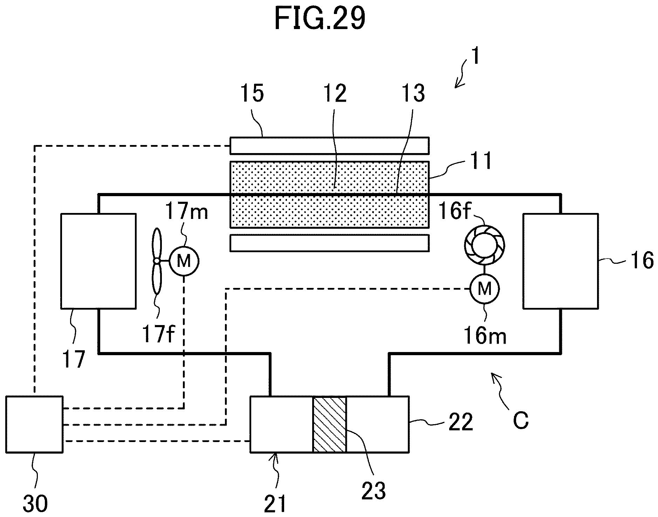

FIG. 29 is a piping system diagram of a magnetic refrigeration apparatus (1) according to a sixth variation. In FIG. 29, the same components as those of the embodiment illustrated in FIG. 1 are denoted by the same reference numerals.

In the magnetic refrigeration apparatus (1) of the sixth variation, as illustrated in FIG. 29, a first fan (16f) is disposed in the vicinity of the first heat exchanger (16). The first fan (16f) is driven by a first motor (16m). A second fan (17f) is disposed in the vicinity of the second heat exchanger (17). The second fan (17f) is driven by a second motor (17m). The first motor (16m) and the second motor (17m) are driven and controlled by the controller (30).

The feature of this variation is that the operation of the fans (16f, 17f) is controlled as described below in the defrosting operation of the above-described embodiment.

In first fan control, the second fan (17f) is stopped in the defrosting operation when the temperature of the second heat exchanger (17) is higher than the ambient temperature of the second heat exchanger (17). In this manner, when the second heat exchanger (17) is the low-temperature-side heat exchanger (e.g., outdoor heat exchanger) and the temperature of the outdoor heat exchanger is higher than the outdoor air temperature, the second fan (17f) is stopped, whereby heat dissipation from the outdoor heat exchanger to the outdoor air can be prevented and the defrosting can be efficiently performed.

Alternatively, instead of or in addition to the first fan control, second fan control described below may be performed.

In the second fan control, the first heat exchanger (16) is the indoor heat exchanger, and the first fan (indoor fan) (16f) is stopped in the defrosting operation. This can suppress a decrease in the temperature of the indoor space due to cold air being sent from the indoor unit provided with the indoor heat exchanger.

### (Other Embodiments)

In the above-described embodiments and variations, the magnetic refrigeration apparatus as the solid-state refrigeration apparatus has been described as an example. However, the solid-state refrigeration apparatus may be of a type other than the magnetic refrigeration type that induces the magnetocaloric effect in the magnetic working substance (12). In the present disclosure, the solid-state refrigerant substance includes those having an intermediate property between liquid and solid, such as flexible crystal.

Other types of solid-state refrigeration apparatus include, for example, (1) a type that causes a solid-state refrigerant substance to induce an electrocaloric effect, (2) a type that causes a solid-state refrigerant substance to induce a barocaloric effect, and (3) a type that causes a solid-state refrigerant substance to induce an elastocaloric effect.

A force field applier (hereinafter also referred to as an inducer) of the solid-state refrigeration apparatus of the type (1) makes an electric field variation on the solid-state refrigerant substance. This causes a phase transition of the solid-state refrigerant substance, for example, from ferroelectric to paraelectric, thereby causing the solid-state refrigerant substance to generate or absorb heat.

An inducer of the solid-state refrigeration apparatus of the type (2) makes a pressure variation on the solid-state refrigerant substance. Accordingly, the solid-state refrigerant substance undergoes a phase transition, and therefore, generates or absorbs heat.

An inducer of the solid-state refrigeration apparatus of the type (3) makes a stress variation on the solid-state refrigerant substance. Accordingly, the solid-state refrigerant substance undergoes a phase transition, and therefore, generates or absorbs heat.

While the embodiments and variations have been described above, it will be understood that various changes in form and details can be made without departing from the spirit and scope of the claims. The above-described embodiments and variations may be appropriately combined or replaced. The expressions of "first", "second", ... described above are used to distinguish the terms to which these expressions are given, and do not limit the number and order of the terms.

### INDUSTRIAL APPLICABILITY

As described above, the present disclosure is useful for a solid-state refrigeration apparatus, in particular, a magnetic refrigeration apparatus.

### DESCRIPTION OF REFERENCE CHARACTERS

1 Magnetic Refrigeration Apparatus (Solid-State Refrigeration Apparatus)
11 Housing
11a to 11e Partial Housing
12 Magnetic Working Substance (Solid-State Refrigerant Substance)
12a to 12e Substances Having Different Temperatures at which Caloric Effect is Maximized
13 Internal Flow Path
15 Magnetic Field Modulator (Force Field Modulator)
16 First Heat Exchanger 16f First Fan (Indoor Fan)
17 Second Heat Exchanger 17f Second Fan (Fan)
21 Reciprocating Pump (Heat Medium Conveyor)
50 Heat Medium Conveyor
100 Rotary Valve Type Multi-Way Switching Valve (Heat Medium Conveyor)
C Heat Medium Circuit

## Claims

1. A solid-state refrigeration apparatus comprising:
a housing (11) having a solid-state refrigerant substance (12) and an internal flow path (13) through which a heat medium flows while exchanging heat with the solid-state refrigerant substance (12);
a force field modulator (15) configured to induce a caloric effect by making a force field variation on the solid-state refrigerant substance (12) in the housing (11);
a first heat exchanger (16);
a second heat exchanger (17);
a heat medium circuit (C) to which the first heat exchanger (16), the second heat exchanger (17), and the internal flow path (13) are connected; and
a heat medium conveyor (21, 50, 100) configured to convey the heat medium to and from the solid-state refrigerant substance (12) in the housing (11) in accordance with the force field variation in the heat medium circuit (C),
the solid-state refrigeration apparatus (1) being configured to perform a heating operation in which the heat medium heated by the solid-state refrigerant substance (12) dissipates heat in the first heat exchanger (16) and the heat medium cooled by the solid-state refrigerant substance (12) absorbs heat in the second heat exchanger (17), and a defrosting operation in which frost attached to the second heat exchanger (17) in the heating operation is removed,
the solid-state refrigerant substance (12) including a plurality of substances (12a to 12e) having different temperatures at which a caloric effect is maximized,
the plurality of substances (12a to 12e) being arranged in descending order of the temperature along the internal flow path (13),
in the defrosting operation, a conveying direction of the heat medium in the internal flow path (13) with respect to a phase of the force field variation being switched to a direction opposite to that in the heating operation.

2. The solid-state refrigeration apparatus of claim 1, wherein
the housing (11) includes a plurality of partial housings (11a to 11e) connected in series in the heat medium circuit (C), and
each of the plurality of partial housings (11a to 11e) has at least one of the plurality of substances (12a to 12e).

3. The solid-state refrigeration apparatus of claim 1 or 2, wherein
the force field modulator (15) and the heat medium conveyor (21, 50, 100) are electrically controlled to switch the conveying direction of the heat medium in the internal flow path (13) with respect to the phase of the force field variation.

4. The solid-state refrigeration apparatus of claim 1 or 2, wherein
the force field modulator (15) and the heat medium conveyor (100) are mechanically controlled to switch the conveying direction of the heat medium in the internal flow path (13) with respect to the phase of the force field variation.

5. The solid-state refrigeration apparatus of any one of claims 1 to 4, further comprising:
a fan (17f) configured to send air to the second heat exchanger (17), wherein
the fan (17f) is stopped in the defrosting operation when a temperature of the second heat exchanger (17) is higher than an ambient temperature of the second heat exchanger (17).

6. The solid-state refrigeration apparatus of any one of claims 1 to 5, wherein
the first heat exchanger (16) is an indoor heat exchanger,
the solid-state refrigeration apparatus further comprises an indoor fan (16f) configured to send air to the indoor heat exchanger, and
the indoor fan (16f) is stopped in the defrosting operation.

7. The solid-state refrigeration apparatus of any one of claims 1 to 6, wherein
a frequency of the force field variation is increased in the defrosting operation.

8. The solid-state refrigeration apparatus of any one of claims 1 to 7, wherein
in the defrosting operation, a flow rate of the heat medium in the heat medium circuit (C) is increased.

9. The solid-state refrigeration apparatus of any one of claims 1 to 8, wherein
the solid-state refrigerant substance (12) is a magnetic working substance (12), and
the force field modulator (15) is a magnetic field modulator (15) configured to make a magnetic field variation on the magnetic working substance (12).
